# EUROPEAN PATENT APPLICATION

(11) **EP 4 575 747 A1**
(43) Date of publication of application: **25.06.2025**
(21) Application number: 24790095.4
(22) Date of filing: 07.10.2024
(51) Int. Cl.: G06F 3/06, G06F 12/02, G06F 12/06, G06F 12/08, G06F 13/16, G06F 9/06

(54) **STORAGE DEVICE, ELECTRONIC DEVICE, METHOD, AND NON-TRANSITORY COMPUTER-READABLE RECORDING MEDIUM FOR DYNAMICALLY ALLOCATING RESOURCE TO PARTITION**

(30) Priority: 16.10.2023 KR 20230138096
(71) Applicant: Samsung Electronics Co., Ltd, Suwon-si, Gyeonggi-do 16677 (KR)
(72) Inventor: LEE, Manjong, Suwon-si, Gyeonggi-do 16677 (KR); WOO, Hobin, Suwon-si, Gyeonggi-do 16677 (KR); SEO, Sungjong, Suwon-si, Gyeonggi-do 16677 (KR); LEE, Seunghui, Suwon-si, Gyeonggi-do 16677 (KR); LEE, Woosung, Suwon-si, Gyeonggi-do 16677 (KR); LEE, Woojoong, Suwon-si, Gyeonggi-do 16677 (KR); LEE, Changheun, Suwon-si, Gyeonggi-do 16677 (KR); HYUN, Sunghwan, Suwon-si, Gyeonggi-do 16677 (KR)
(74) Representative: HGF
(86) International application number: PCT/KR2024/015213
(87) International publication number: WO 2025/084688

(57) **Abstract**

An electronic device may include a storage device including at least one partition, may include a processor, and may include memory storing instructions. The instructions are configured, when executed by the processor, to cause the electronic device to identify a generation request of a second partition to which at least a part of a memory area is allocated in a first memory area allocated to a first partition from the at least one partition, are configured, when executed by the processor, to cause the electronic device to request the storage device to generate the second partition with an address space corresponding to a first capacity specified in the generation request, in response to the generation request, are configured, when executed by the processor, to cause the electronic device to receive a response indicating a generation result of the second partition from the storage device, and are configured, when executed by the processor, to cause the electronic device to generate a block module for accessing the address space of the second partition, based on the generation result

## Description

### [Technical Field]

The following description relates to a storage device, an electronic device, a method, and a non-transitory computer-readable storage medium for dynamically allocating a resource to a partition.

### [Background Art]

A host (e.g., a smartphone) of a universal flash storage (UFS) may communicate with a storage device (e.g., a solid state drive (SSD)) through a predetermined interface. The host may perform various management operations on the storage device. The host may use various commands defined by the predetermined interface to perform the management operation on the storage device.

### [Disclosure]

### [Technical Solution]

An electronic device is disclosed. The electronic device may comprise a processor (120). The electronic device may comprise memory (130) including a storage device (205) including a memory area (591, 593), able to support a plurality of logical partitions. The memory area may include a first memory area having a first capacity and data may be stored in at least part of the first memory area, and the first memory area may be allocated to a first logical partition (370) of the storage device, and the memory has stored thereon instructions. The instructions when executed by the processor, may cause the electronic device to identify whether the electronic device satisfies a designated condition. The instructions when executed by the processor, may cause the electronic device to based on identifying that the electronic device satisfies the designated condition, deliver, to the storage device, a generation request for generating, in the storage device, a second logical partition to which a second memory area of the memory with a second capacity less than the first capacity is allocated, and which has an address space (581) corresponding to the second capacity. The instructions when executed by the processor, may cause the electronic device to generate, by the storage device, the second logical partition (380) based on the generation request.

A method is disclosed. The method may be executed in an electronic device (101) including a storage device including memory area (591, 593) able to support a plurality of logical , wherein the memory area (591, 593) includes a first memory area (591) having a first capacity and data is stored in at least part of the first memory area (591, 593), and the first memory area (591, 593) is allocated to a first logical partition (370) of the storage device (205). The method may comprise: identifying whether the electronic device (101) satisfies a designated condition. The method may comprise: based on identifying that the electronic device (101) satisfies the designated condition, delivering, to the storage device (205), a generation request for generating, in the storage device, a second logical partition (380) to which a second memory area of the memory (130) with a second capacity less than the first capacity of the first memory area (591, 593) is allocated, and which has an address space (581) corresponding to the second capacity. The method may comprise: generating by the storage device (205), the second logical partition based on the generation request.

A non-transitory computer-readable storage medium is disclosed. The non-transitory computer-readable storage medium may store a program including instructions. The instructions may , when executed by a processor of an electronic device including memory (130) including a storage device (205) including a memory area, able to support a plurality of logical partitions, the memory area (591, 593) including a first memory area having a first capacity and data being stored in at least part of the first memory area, and the first memory area being allocated to a first logical partition (370) of the storage device, cause the electronic device to identify whether the electronic device satisfies a designated condition. The instructions when executed by the processor, may cause the electronic device to based on identifying that the electronic device satisfies the designated condition, deliver, to the storage device, a generation request for generating, in the storage device, a second logical partition (380) to which a second memory area (581) of the memory with a second capacity less than the first capacity is allocated, and which has an address space corresponding to the second capacity. The instructions when executed by the processor, may cause the electronic device to generate, by the storage device, the second logical partition based on the generation request.

A storage device is disclosed. The storage device may comprise an interfacing circuit (250) that is electrically connected to an electronic device (101) and transmits and receives data with the electronic device (101). The storage device may comprise non-volatile memory (290) including a memory unit (390), the memory unit (390) including a first memory area (591), having a first capacity and data is stored in at least part of the first memory area (591, 593), and the first memory area (591, 593) is allocated to a first logical partition (370) of the storage device (205), and a controller (270). The controller (270) is configured to: through the interfacing circuit (250), obtain, from the electronic device (101), a request for generating, in the storage device (205), a second logical partition (380) to which a second memory area (593) with a second capacity less than the first capacity of the first memory area (591, 593) is allocated and which has an address space (581) corresponding to the second capacity. The controller is configured to: in response to the request, generate the second logical partition including an address space corresponding to second capacity specified in the request. The controller is configured to: through the interfacing circuit, transmit a response indicating a result of the request.

A method is disclosed. The method may be performed by a storage device including an interfacing circuit that is electrically connected to an electronic device and transmits and receives data with the electronic device and non-volatile memory including a memory unit, the memory unit (390) including a first memory area (591), having a first capacity and data is stored in at least part of the first memory area (591, 593), and the first memory area (591, 593) is allocated to a first logical partition (370) of the storage device. The method comprises: through the interfacing circuit (250), obtaining, from the electronic device (101), a request for generating, in the storage device, a second logical partition (380) to which a second memory area (593) with a second capacity less than the first capacity of the first memory area (591, 593) is allocated and which has an address space (581) corresponding to the second capacity. The method comprises: in response to the request, generating the second logical partition including an address space corresponding to second capacity specified in the request. The method comprises: through the interfacing circuit, transmitting a response indicating a result of the request.

A non-transitory computer-readable storage medium is disclosed. The non-transitory computer-readable storage medium may store a program including instructions. The instructions may, when executed by a processor of a storage device including an interfacing circuit that is electrically connected to an electronic device and transmits and receives data with the electronic device and non-volatile memory including a memory unit, the memory unit (390) including a first memory area (591), having a first capacity and data is stored in at least part of the first memory area (591, 593), and the first memory area (591, 593) is allocated to a first logical partition (370) of the storage device, cause the storage device to through the interfacing circuit (250), obtain, from the electronic device (101), a request for generating, in the storage device, a second logical partition (380) to which a second memory area (593) with a second capacity less than the first capacity of the first memory area (591, 593) is allocated and which has an address space (581) corresponding to the second capacity. The instructions may, when executed by the processor, cause the storage device to, in response to the request, generate the second logical partition including an address space corresponding to second capacity specified in the request. The instructions may, when executed by the processor, cause the storage device to through the interfacing circuit, transmit a response indicating a result of the request.

### [Description of the Drawings]

FIG. 1 is a block diagram of an electronic device in a network environment, according to various embodiments.
FIG. 2 is a block diagram of an electronic device according to an embodiment.
FIG. 3 is a block diagram of an electronic device according to an embodiment.
FIG. 4 illustrates an example of an operation of an electronic device according to an embodiment.
FIG. 5A illustrates an example of an operation of an electronic device according to an embodiment.
FIG. 5B illustrates an example of capacity allocation according to an embodiment.
FIG. 6A illustrates an example of an operation of an electronic device according to an embodiment.
FIG. 6B illustrates an example of capacity allocation release according to an embodiment.
FIG. 6C illustrates an example of capacity allocation release according to an embodiment.
FIG. 7 illustrates an example of an operation of an electronic device according to an embodiment.
FIG. 8A illustrates an example of an operation of an electronic device according to an embodiment.
FIG. 8B illustrates an example of capacity allocation according to an embodiment.
FIG. 9A illustrates an example of an operation of an electronic device according to an embodiment.
FIG. 9B illustrates an example of capacity allocation according to an embodiment.
FIG. 10A illustrates an example of an operation of an electronic device according to an embodiment.
FIG. 10B illustrates an example of capacity allocation according to an embodiment.
FIG. 10C illustrates an example of capacity allocation according to an embodiment.
FIG. 11 is a flowchart illustrating an operation of an electronic device according to an embodiment.
FIG. 12 is a flowchart illustrating an operation of an electronic device according to an embodiment.

### [Mode for Invention]

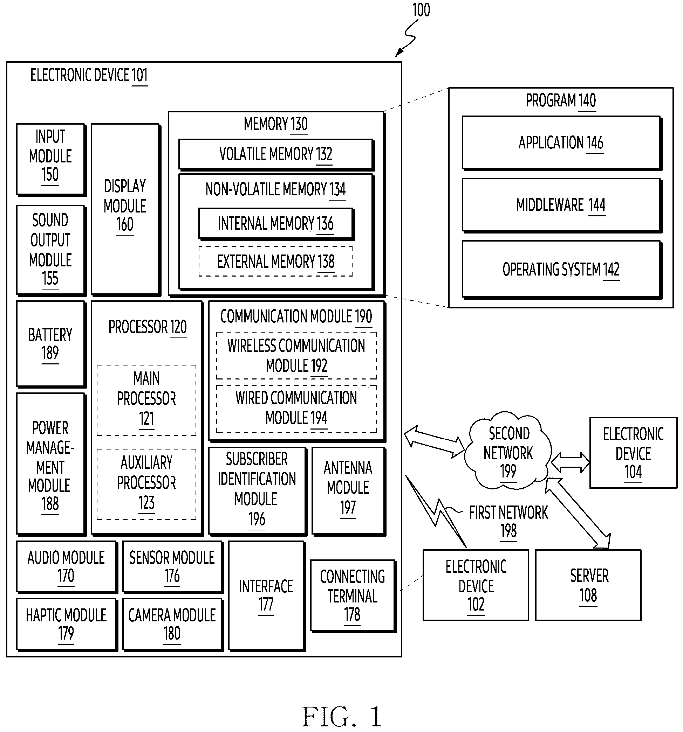

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

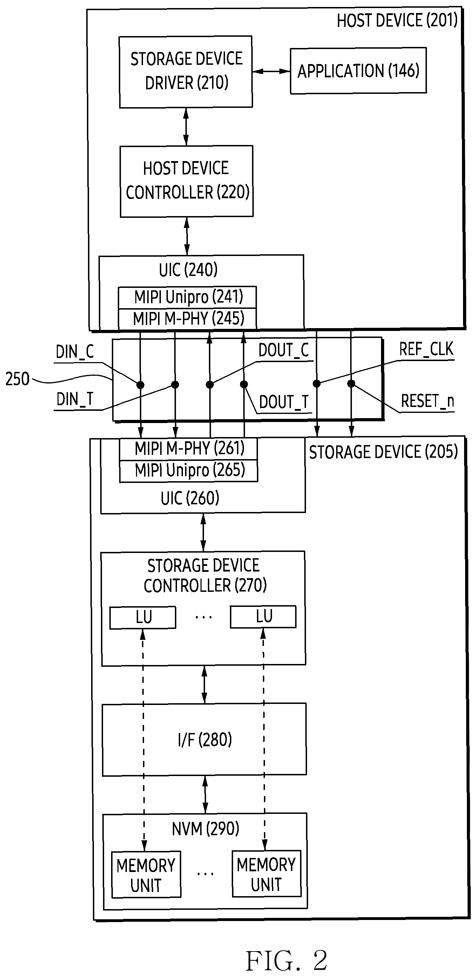

FIG. 2 is a block diagram of an electronic device 101 according to an embodiment.

Referring to FIG. 2, the electronic device 101 may include a host device 201 and a storage device 205. The host device 201 and the storage device 205 may be electrically connected to each other through an interface 250. In an embodiment, the electronic device 101 may comply with a universal flash storage (UFS) standard published by joint electron device engineering council (JEDEC).

In an embodiment, the host device 201 may be included in a processor 120 of FIG. 1. In an embodiment, the host device 201 may include an application 146, a storage device driver 210, a host device controller 220, and a UFS interconnection (UIC) layer 240. Hereinafter, the UFS interconnection (UIC) layer 240 may be referred to as a UIC layer 240.

In an embodiment, the application 146 may refer to a program that desires communication with the storage device 205 to use a function of the storage device 205. The application 146 may transmit an input-output request (IOR) to the storage device driver 210 for input and output for the storage device 205. The IOR may include a read request, a write request, and/or a discard request of data. However, it is not limited thereto.

In an embodiment, the storage device driver 210 may manage the host device controller 220 through a host controller interface (UFS-HCI). The storage device driver 210 may convert the IOR generated by the application 146 into a UFS command defined by the UFS standard, and transmit the converted UFS command to the host device controller 220. One IOR may be converted into a plurality of UFS commands. The UFS command may basically be a command defined by a small computer system interface (SCSI) standard. The UFS command may be a UFS standard-only command. However, it is not limited thereto.

In an embodiment, the host device controller 220 may transmit the UFS command converted by the storage device driver 210 to a UIC layer 260 of the storage device 205 through the UIC layer 240 and the interface 250.

In an embodiment, the UIC layer 240 on the host device 201 side may include a mobile industry processor interface (MIPI) M-PHY 245 and a MIPI unified protocol (UniPro) 241. The UIC layer 260 on the storage device 205 side may include a MIPI M-PHY 265 and MIPI UniPro 261.

In an embodiment, the interface 250 may be an interface based on the UFS standard. However, it is not limited thereto. For example, the interface 250 may be an interface based on double data rate (DDR), DDR2, DDR3, DDR4, DDR5, DDR6, low power DDR (LPDDR), universal serial bus (USB), multimedia card (MMC), embedded MMC (eMMC), peripheral component interconnection (PCI), PCI-express (PCI-E), advanced technology attachment (ATA), Serial-ATA, Parallel-ATA, SCSI, enhanced small disk interface (ESDI), integrated drive electronics (IDE), Firewire, and/or nonvolatile memory express (NVMe).

In an embodiment, the interface 250 may include a line transmitting a reference clock REF_CLK, a line transmitting a hardware reset signal RESET_n for the storage device 205, a pair of lines transmitting differential input signal pairs DIN_T and DIN_C, and a pair of lines transmitting differential output signal pairs DOUT_T and DOUT_C.

According to an embodiment, the interface 250 may also be referred to as an interfacing circuit.

In an embodiment, the storage device 205 may be included in a memory 130 (or a non-volatile memory 134) of FIG. 1. In an embodiment, the storage device 205 may include the UIC layer 260, a storage device controller 270, an interface 280, and a non-volatile memory (NVM) 290.

In an embodiment, the storage device 205 may be included in the electronic device 101 in a state of being physically separated from the host device 201 (or the processor 120). The storage device 205 may be included in the electronic device 101 by being mounted in a same package as the host device 201 (or the processor 120). The storage device 205 may be a solid state device (SSD) or a memory card that is attachable to and detachable from other components of the electronic device 101 through the interface 250.

In an embodiment, the storage device 205 may be a device to which a standard protocol according to UFS, eMMC, or NVMe is applied. However, it is not limited thereto.

In an embodiment, the storage device controller 270 and the NVM 290 may be connected to each other through the interface 280.

In an embodiment, the storage device controller 270 of the storage device 205 may generally control the operation of the storage device 205. The storage device controller 270 may manage the NVM 290 through a logical unit (LU), which is a logical data storage unit. In an embodiment, the logical unit may also be referred to as a partition. The storage device controller 270 may include a flash translation layer (FTL). The storage device controller 270 may convert a logical data address (e.g., a logical block address (LBA)) delivered from the host device 201 into a physical data address (e.g., a physical block address (PBA)) by using address mapping information of the FTL. In the electronic device 101, a logical block for storing user data may have a size of a predetermined range. For example, the minimum size of the logic block may be set to 4 Kbyte.

In an embodiment, when a command from the host device 201 is inputted to the storage device 205 through the UIC layer 260, the storage device controller 270 may perform an operation according to the inputted command and transmit a completion response to the host device 201 when the operation is completed.

In an embodiment, in case that the host device 201 desires to write user data to the storage device 205, the host device 201 may transmit a data write command to the storage device 205. When receiving a response indicating that user data is ready-to-transfer from the storage device 205, the host device 201 may transmit the user data to the storage device 205. The storage device controller 270 may write the received user data based on the address mapping information of the FTL, at a selected location of the NVM 290.

In an embodiment, in case that the host device 201 desires to read user data stored in the storage device 205, the host device 201 may transmit a data read command to the storage device 205. The storage device controller 270, which has received the command, may read user data from the NVM 290 based on the data read command and transmit the read user data to the host device 201.

In an embodiment, the NVM 290 may include one or more memory units. One or more memory units may be NAND flash memory with a two dimensional (2D) structure. One or more memory units may be vertical (V)-NAND flash memory with a three dimensional (3D) structure. However, it is not limited thereto.

In an embodiment, each of the one or more memory units may include a memory cell array. The memory cell array may include a 2D memory cell array or a 3D memory cell array. The memory cell array may include a plurality of memory cells. Each of the plurality of memory cells may store a designated number of bits of information. Each of the plurality of memory cells may be classified as a single level cell (SLC), a multi level cell (MLC), a triple level cell (TLC), or a quadruple level cell (QLC) according to the number of bits it stores. TLC (or other higher order memory cell types) provides three times the capacity of SLC, but may be inferior in terms of performance and lifespan. Therefore, in some examples a TLC LU may be used for high-capacity data storage purposes and a SLC LU may be used for high performance purposes.

In conventional systems, the configuration and properties of LUs may be changed via re-provisioning. However, re-provisioning is performed rarely because user data stored in the LUs is lost, thus limiting the flexibility and adaptability of conventional memory management. Therefore, there is a need for improved and dynamic LU memory management techniques. Furthermore, when SLC LU or MLC LU is used for a TLC memory device, the indicated or accessible/available capacity of the TLC memory device may be reduced. Therefore, there is a need for improved approaches for LU memory management in order to reduce the likelihood of memory capacity being incorrectly represented from both a system and user perspective. The present disclosure provides approaches addressing these shortcomings of conventional systems.

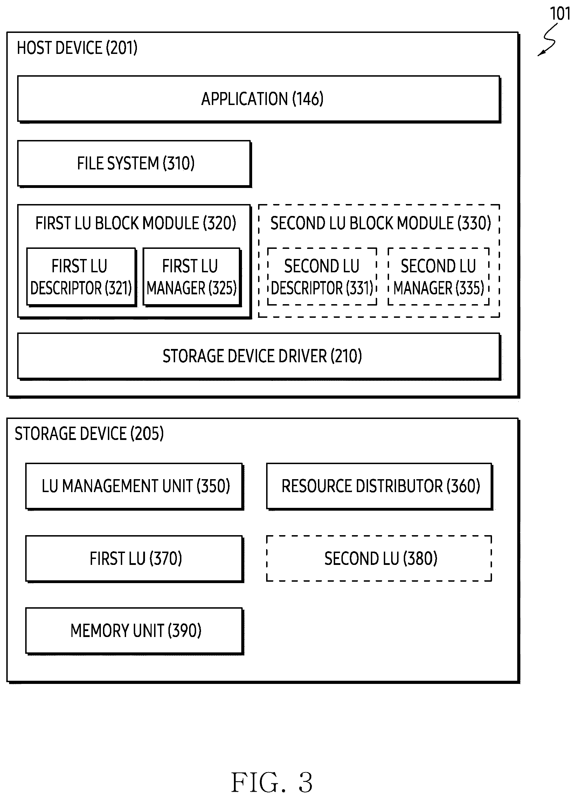

FIG. 3 is a block diagram of an electronic device 101 according to an embodiment.

FIG. 3 may be described with reference to FIGS. 1 and 2.

Referring to FIG. 3, the electronic device 101 may include a host device 201 and a storage device 205.

In an embodiment, the host device 201 may include an application 146, a file system 310, a first LU block module 320, and a storage device driver 210.

In an embodiment, the application 146 may correspond to the application 146 of FIG. 1. In an embodiment, the application 146 may generate a command (or request) related to a virtual LU (e.g., a first LU 370 and/or a second LU 380). For example, the application 146 may request to read data stored in a memory unit 390. For example, the application 146 may request to write data to the memory unit 390. For example, the application 146 may request generation, capacity allocation, and/or capacity allocation release of a block module (e.g., a second LU block module 330). However, it is not limited thereto.

In an embodiment, the application 146 may generate a command (or request) that may be processed by the first LU block module 320 through an application programming interface (API) provided by the file system 310 and/or the first LU block module 320.

In an embodiment, the application 146 may transmit the command (or request) generated based on the API to a block module (e.g., the first LU block module 320 and/or the second LU block module 330). For example, the application 146 may directly transmit the command (or request) generated based on the API to the block module. For example, the application 146 may indirectly transmit the generated command (or request) to the block module by transmitting the generated command (or request) to the file system 310. For example, the file system 310 may convert and/or generate the command (or request) from the application 146 into the API provided by the first LU block module 320. The file system 310 may transmit the command (or request) generated based on the API to the first LU block module 320.

In an embodiment, the file system 310 may be a structure or software used to store data in the storage device 205. In an embodiment, the file system 310 may provide an API related to capacity allocation for the second LU 380 to the application 146.

In an embodiment, the file system 310 (or a primary LU file system (PLUFS)) may manage the first LU 370. In an embodiment, the file system 310 may manage the total sum of capacities allocated to the first LU 370 and the second LU 380 not to exceed the capacity of the memory unit 390.

In an embodiment, the file system 310 may manage files in the storage device 205. In an embodiment, the file system 310 may be mounted in relation to a block module (e.g., the first LU block module 320). Herein, being mounted in relation to the block module may include connecting the block module (e.g., the first LU block module 320) to a specific location (or address) of a directory. In an embodiment, the file system 310 may manage the usage amount of the block module (e.g., the first LU block module 320) not to exceed a marking capacity.

In an embodiment, the file system 310 may manage data in a logical address space. In an embodiment, the file system 310 may allocate the logical address in which data will be stored in response to the command (or request) from the application 146.

In an embodiment, the block module may be a driver for inputting and outputting data in block units. For example, the block module may be a driver that virtualizes (or abstracts) the storage device 205.

In an embodiment, the first LU block module 320 may be a block module for inputting and outputting data with the first LU 370. In an embodiment, the first LU block module 320 may provide an API that the application 146 and/or the file system 310 may call. In an embodiment, the first LU block module 320 may provide an API that enables checking, allocating, and/or releasing the capacity of the second LU 380.

In an embodiment, the first LU block module 320 may include a first LU descriptor 321 and a first LU manager 325.

In an embodiment, the first LU descriptor 321 may include information on the properties and/or state of the first LU 370. Herein, the first LU descriptor 321 may include information as illustrated in Table 1 below.

**[Table 1]**

| PARAMETER NAME | PARAMETER INFORMATION |
|---|---|
| VLU_ID | INDICATE ID OF LU |
| VLU_type | INDICATE WHETHER LU IS PRIMARY OR SECONDARY |
| memory_type | MEMORY TYPE ACCORDING TO NUMBER OF BITS STORED BY MEMORY CELL OF LU(e.g., :SLC, MLC, TLC) |
| SLU | INDICATE LU DEPENDENT ON LU |
| SLU_reserve | INDICATE CAPACITY ALLOCATED TO DEPENDENT LU |

According to an embodiment, the first LU descriptor 321 may further include additional information in addition to the information illustrated in Table 1 above. For example, the first LU descriptor 321 may include information on the maximum virtual capacity of the first LU 370 and/or information on a capacity allocation unit.

In an embodiment, the first LU manager 325 may manage generation, capacity allocation, capacity allocation release, and/or removal of the second LU 380.

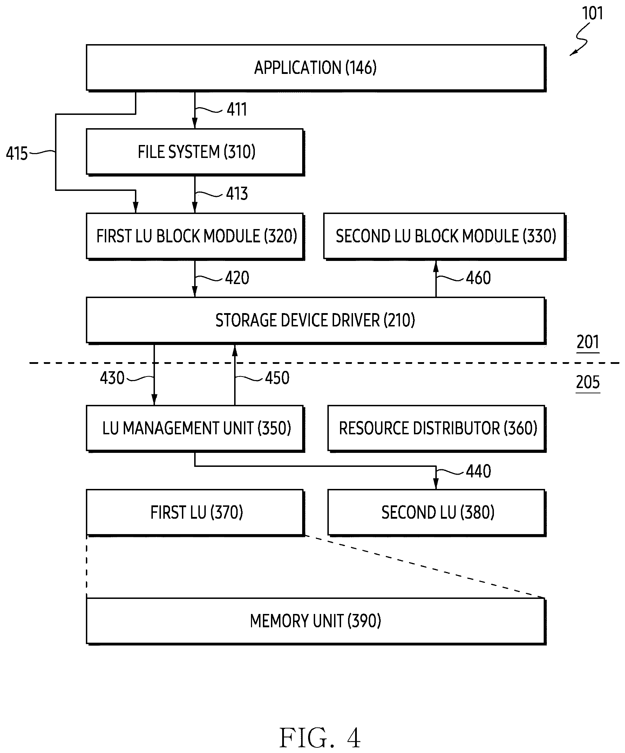

In an embodiment, the host device 201 may generate the second LU block module 330. For example, the application 146 may request generation of the second LU block module 330. In response to the request from the application 146, the first LU block module 320 may request the storage device 205 to generate the second LU block module 330. The generation of the second LU block module 330 may be described with reference to FIG. 4.

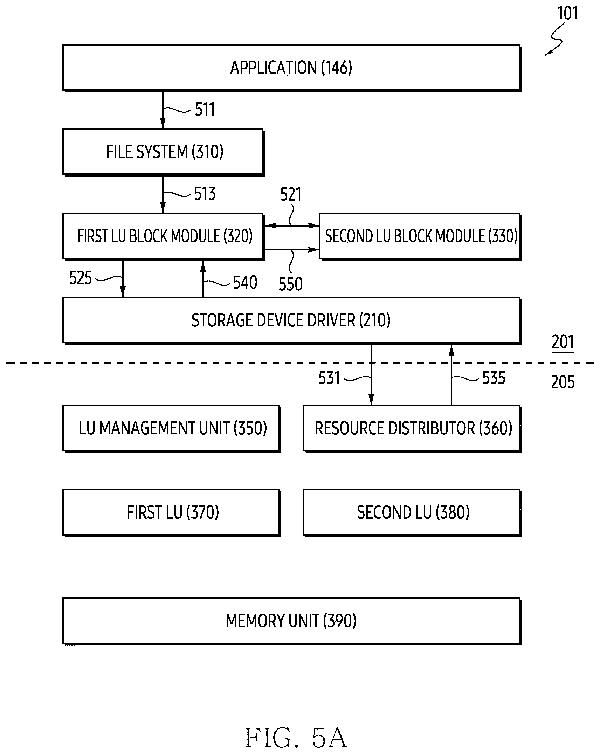

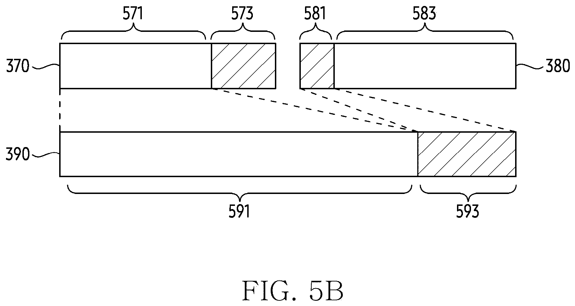

In an embodiment, the host device 201 may allocate a capacity to the second LU block module 330. For example, the application 146 may request capacity allocation of the second LU block module 330. In response to the request from the application 146, the first LU block module 320 may request the storage device 205 the capacity allocation of the second LU block module 330. The capacity allocation of the second LU block module 330 may be described with reference to FIGS. 5A and 5B.

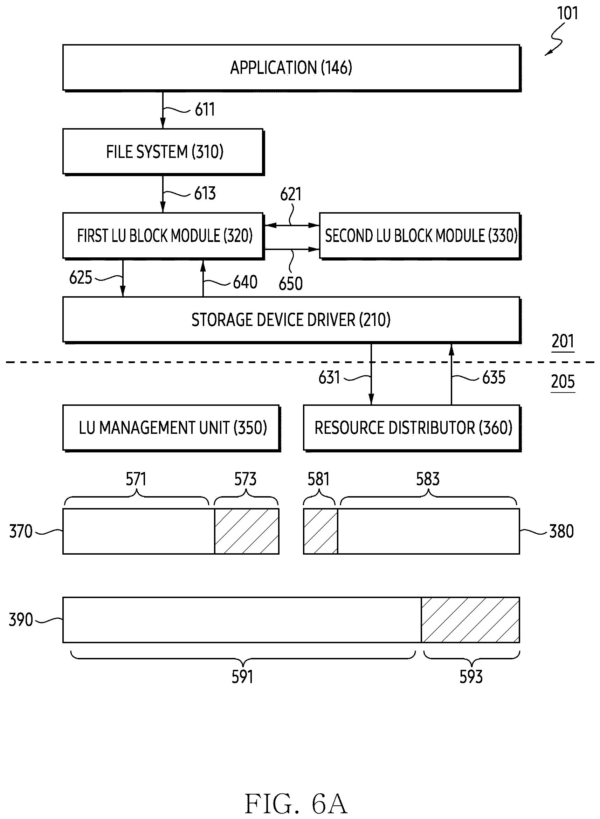

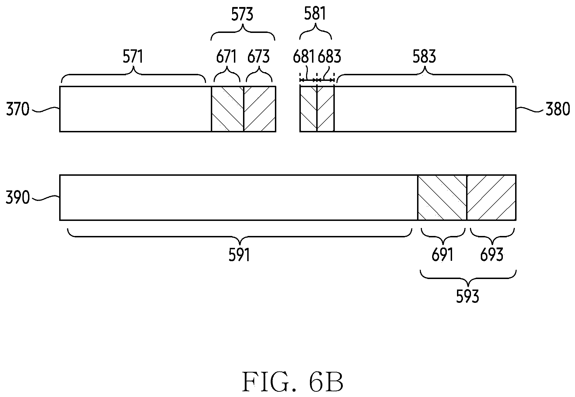

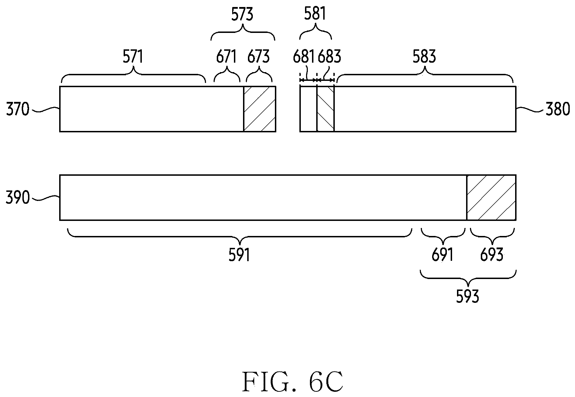

In an embodiment, the host device 201 may release the capacity allocated to the second LU block module 330. For example, the application 146 may request release of the capacity allocated to the second LU block module 330. In response to the request from the application 146, the first LU block module 320 may request the storage device 205 to release the capacity allocated to the second LU block module 330. The release of the capacity allocated to the second LU block module 330 may be described with reference to FIGS. 6A, 6B, and 6C.

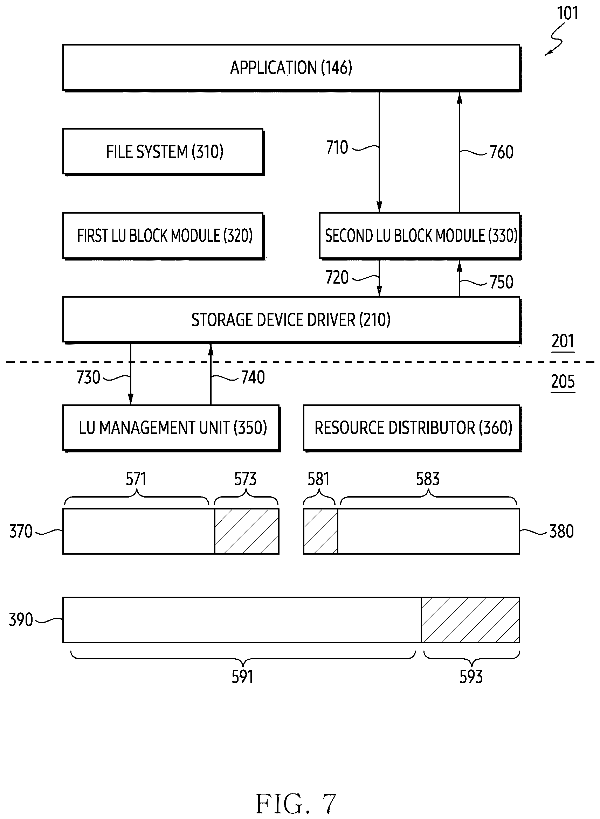

In an embodiment, the host device 201 may generate an input-output request (IOR) for the second LU block module 330. For example, the application 146 may generate the IOR for the second LU block module 330. The second LU block module 330 may transmit the IOR for the second LU block module 330 to the storage device 205 in response to the IOR from the application 146. The IOR for the second LU block module 330 may be described with reference to FIG. 7.

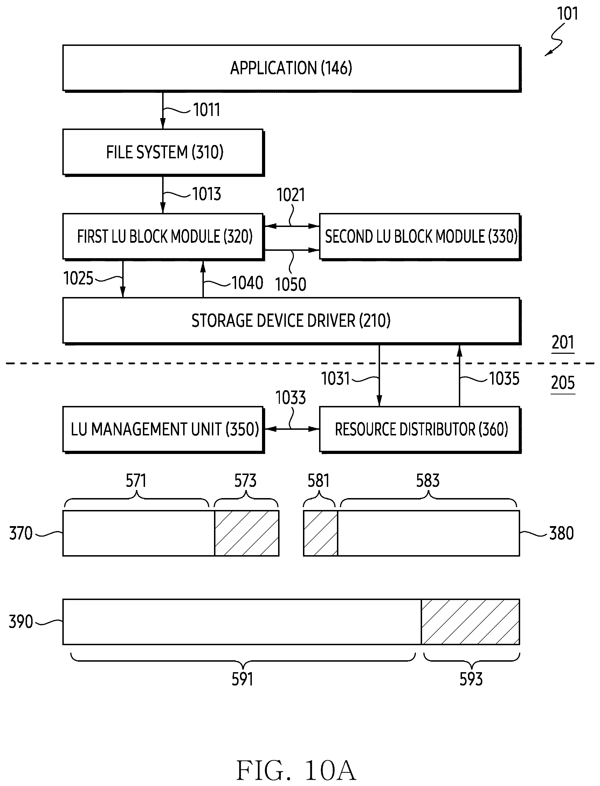

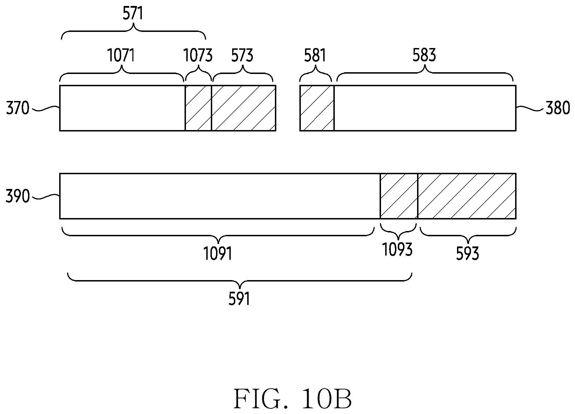

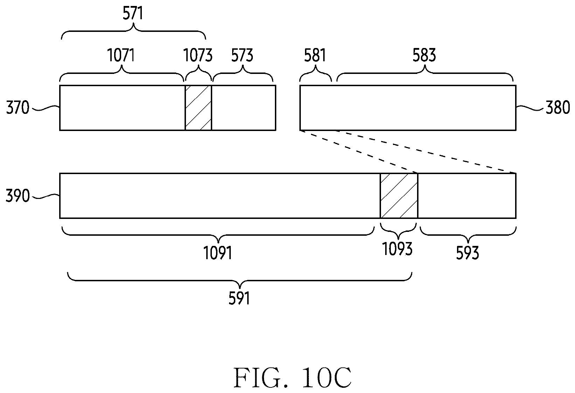

In an embodiment, the host device 201 may request a change in a memory type of the second LU block module 330. For example, the application 146 may request the change in the memory type of the second LU block module 330. In response to the request from the application 146, the first LU block module 320 may request the storage device 205 to change the memory type of the second LU block module 330. The change of the memory type for the second LU block module 330 may be described with reference to FIGS. 10A, 10B, and 10C.

In an embodiment, the second LU block module 330 may be a block module for inputting and outputting data with the second LU 380. In an embodiment, the second LU block module 330 may include a second LU descriptor 331 and a second LU manager 335.

In an embodiment, the second LU descriptor 331 may include information as illustrated in Table 2 below.

**[Table 2]**

| PARAMETER NAME | PARAMETER INFORMATION |
|---|---|
| VLU_ID | INDICATE ID OF LU |
| VLU_type | INDICATE WHETHER LU IS PRIMARY OR SECONDARY |
| memory_type | MEMORY TYPE ACCORDING TO NUMBER OF BITS STORED BY MEMORY CELL OF LU (e.g., SLC, MLC, TLC) |
| PLU | INDICATE LU DEPENDENT ON LU |
| persistence | INDICATE WHETHER LU IS MAINTAINED WHEN SYSTEM IS SHUT DOWN |
| granularity | INDICATE CAPACITY ALLOCATION UNIT (E.G., 4MB) |
| virtual_capacity | INDICATE MAXIMUM VIRTUAL CAPACITY |
| allocated_capacity | INDICATE ALLOCATED CAPACITY |

According to an embodiment, the second LU descriptor 331 may further include additional information in addition to the information illustrated in Table 2 above.

In an embodiment, the second LU manager 335 may manage the capacity allocated to the second LU 380. For example, the second LU manager 335 may manage addresses to which the capacity of the memory unit 390 is allocated in an address space of the second LU 380. For example, the address space of the second LU 380 may correspond to the maximum virtual capacity. For example, the capacity of the memory unit 390 being allocated in the address space may mean that an address of the second LU 380 is mapped to an address of the memory unit 390. For example, the capacity being allocated to the second LU 380 may mean that at least a part of a memory area in the memory unit 390 is allocated to the second LU 380 according to the memory type of the second LU 380.

For example, the second LU manager 335 may cache information on addresses to which a memory area corresponding a capacity in the memory unit 390 in the address space of the second LU 380 is allocated. For example, the second LU manager 335 may not transmit, to the storage device 205, an access request for an address to which the memory area corresponding to the capacity in the memory unit 390 in the address space is not allocated. For example, the second LU manager 335 may generate a response to an access request for the address to which the memory area corresponding to the capacity in the memory unit 390 in the address space is not allocated and transmit the response to the application 146. For example, the second LU manager 335 may transmit to the storage device 205 an access request for an address to which the memory area corresponding to the capacity in the memory unit 390 in the address space is allocated.

In an embodiment, the storage device driver 210 may correspond to the storage device driver 210 of FIG. 2. In an embodiment, the storage device driver 210 may convert an input-output request (IOR) generated by the application 146 into a UFS command defined by a UFS standard.

In an embodiment, the storage device 205 may include an LU management unit 350, a resource distributor 360, the first LU 370, and the memory unit 390. For example, the storage device 205 may correspond to the storage device 205 of FIG. 2.

In an embodiment, the LU management unit 350 may process a command for generation, removal, capacity allocation, and/or capacity allocation release of a logical unit. For example, the LU management unit 350 may process the command for generation, removal, capacity allocation, and/or capacity allocation release of the logical unit from the first LU block module 320.

In an embodiment, the resource distributor 360 may distribute the capacity (or resource) of the memory unit 390 between LUs. For example, the resource distributor 360 may distribute a memory area of the memory unit 390 between the first LU 370 and the second LU 380.

In an embodiment, the first LU 370 may correspond to a space (or a partition) of the memory area of the memory unit 390. For example, an entire memory area of the memory unit 390 may be allocated to the first LU 370. In an embodiment, the first LU 370 may also be referred to as a first partition.

In an embodiment, in the second LU 380, a partial memory area may be allocated in the memory unit 390 allocated to the first LU 370 from the first LU 370. The second LU 380 may be an LU dependent on the first LU 370. In an embodiment, the second LU 380 may also be referred to as a second partition. According to an embodiment, an LU having the dependent LU may be referred to as a primary LU (or PLU). According to an embodiment, an LU dependent on another LU may be referred to as a secondary LU (or SLU). In FIG. 3, it is illustrated that there is one second LU 380, but this is only an example. According to an embodiment, two or more second LUs 380 may be included. The inclusion of two or more second LUs 380 may mean that a plurality of second LUs 380 to which different partial memory areas are allocated exist in the memory unit 390 allocated to the first LU 370.

In an embodiment, the memory unit 390 may be a NAND flash memory with a 2D structure. In an embodiment, the memory unit 390 may be a V-NAND flash memory with a 3D structure. However, it is not limited thereto.

In an embodiment, the memory unit 390 may have a capacity. In an embodiment, the capacity of the memory unit 390 may vary according to the number of bits each of a plurality of memory cells of the memory unit 390 stores. For example, in case that each of the plurality of memory cells is SLC, MLC, or TLC, the capacity of the memory unit 390 may be 4GB, 8GB, or 12GB.

According to an embodiment, the electronic device 101 may provide information (e.g., information in Table 1 and/or Table 2) indicating a relationship between the first LU 370 and the second LU 380 to a user through a display module 160.

In FIG. 3, it is illustrated that there is one first LU 370 and one second LU 380, but this is only an example. According to an embodiment, one or more memory units 390 may be included in the storage device 205. According to an embodiment, the first LU 370 may exist for each of the one or more memory units 390. According to an embodiment, one or more second LUs 380 may exist for one first LU 370. According to an embodiment, the electronic device 101 may set priority of input and output for one or more first LUs 370. According to an embodiment, the electronic device 101 may set priority of input and output for the one or more second LUs 380 for one first LU 370.

Hereinafter, an operation of generating the second LU 380 by the electronic device 101 will be described.

FIG. 4 illustrates an example of an operation of an electronic device 101 according to an embodiment. Operations of FIG. 4 may be initiated when the electronic device 101 is booting. The operations of FIG. 4 may be initiated when the electronic device 101 is in runtime (e.g., the application 146 is running). However, it is not limited thereto. The operations of FIG. 4 may be initiated when a designated condition is satisfied. For example, the operations of FIG. 4 may be initiated when memory optimization is needed according to insufficient capacity, user settings, and user usage pattern. For example, the application 146 may initiate the operations of FIG. 4 in case that the available capacity of the first LU 370 is less than or equal to a designated capacity. For example, the application 146 may initiate the operations of FIG. 4 in a designated environment (e.g., when performing a user-designated operation) according to the user's setting. For example, in case that the application 146 needs to secure additional capacity according to the user's usage pattern (e.g., downloading a large file), the operations of FIG. 4 may be initiated.

FIG. 4 may be described with reference to FIGS. 1, 2, and 3.

In an embodiment, the application 146 may generate a command (or request) related to the second LU block module 330. For example, the application 146 may generate a generation command for the second LU block module 330. For example, the application 146 may generate a generation command including parameters for generating the second LU 380. In an embodiment, the application 146 may set parameters for generating the second LU 380 as illustrated in Table 3 below. However, it is not limited thereto. For example, the command (or request) related to the second LU block module 330 may be generated by other components (e.g., middleware 144 and/or operating system 142) (or kernel) in a program 140 of the electronic device 101.

**[Table 3]**

| PARAMETER NAME | PARAMETER VALUE |
|---|---|
| memory_type | SLC |
| PLU | plu0 |
| persistence | 1 |
| granularity | 4MB |
| virtual_capacity | 3GB |

For example, the application 146 may set parameters for generating the second LU 380 whose memory type is SLC, an ID of dependent PLU is plu0 (i.e., the first LU 370), a capacity allocation unit is 4 MB, a maximum virtual capacity is 3 GB, and are maintained even when the electronic device 101 is terminated (i.e. shutdown). According to an embodiment, a memory type of the second LU 380 may be the same as or different from a memory type of the first LU 370. For example, the second LU 380 may operate as TLC, and the first LU 370 may operate as the TLC. For example, the second LU 380 may operate as the TLC, and the first LU 370 may operate as SLC. For example, the second LU 380 may operate as the SLC, and the first LU 370 may operate as an MLC. However, it is not limited thereto.

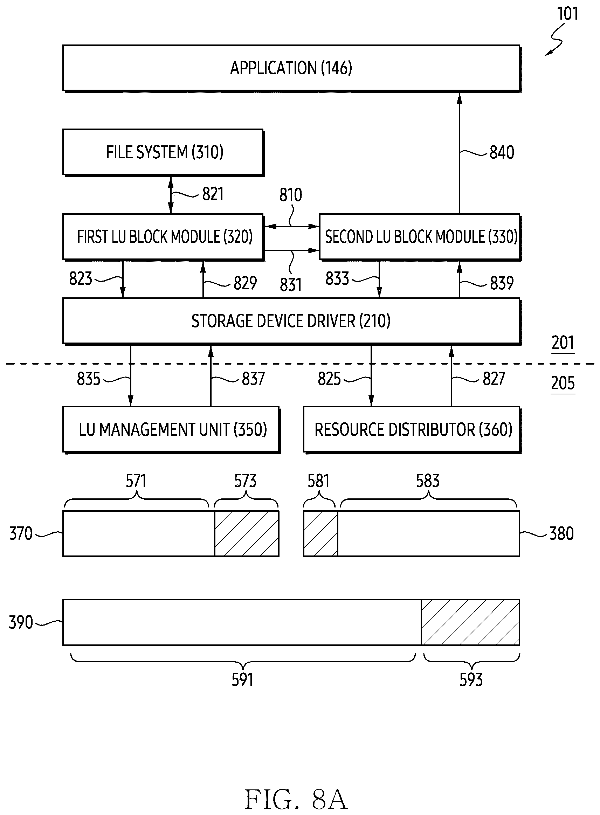

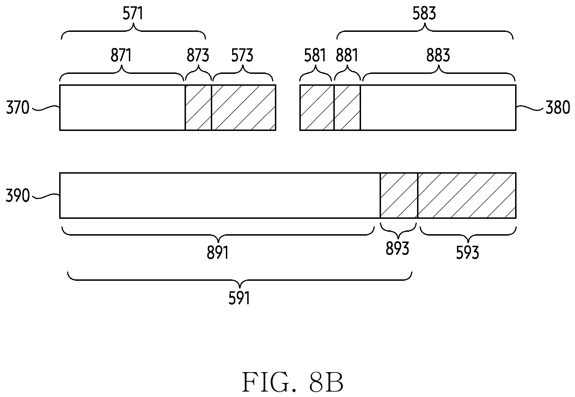

According to an embodiment, the application 146 may further set a parameter indicating the properties of the second LU 380. For example, the application 146 may set whether a memory allocation type of the second LU 380 is explicit or implicit. For example, in case that the memory allocation type is explicit, the second LU 380 may be allocated capacity only to an explicit capacity allocation request. For example, in case that the memory allocation type is implicit, the second LU 380 may be allocated capacity by the explicit capacity allocation request and/or an implicit capacity allocation request. The implicit capacity allocation request may be described with reference to FIGS. 8A and 8B. For example, the application 146 may set the priority of input and output of the second LU 380. For example, in case that an input/output request occurs, the input/output request may be delivered to a high priority logical unit among logic units (e.g., the first LU 370 and/or the second LU 380). However, it is not limited thereto.

In an embodiment, the application 146 may deliver a generation command of the second LU 380 to a first LU block module 320. For example, in operation 411, the application 146 may deliver the generation command of the second LU 380 to a file system 310, and in operation 413, the file system 310 may deliver the generation command of the second LU 380 to the first LU block module 320. According to an embodiment, the application 146 may directly deliver the generation command to the first LU block module 320 without going through the file system 310. For example, in operation 415, the application 146 may directly deliver the generation command of the second LU 380 to the first LU block module 320.

In an embodiment, in operation 420, the first LU block module 320 may deliver the generation command of the second LU 380 to the storage device driver 210.

In an embodiment, the storage device driver 210 may generate a UFS command for generating the second LU 380. Hereinafter, the UFS command for generating the LU may be referred to as a generation UFS command.

In an embodiment, the storage device driver 210 may generate the generation UFS command based on parameters included in the generation command of the second LU 380. In an embodiment, the storage device driver 210 may generate the generation UFS command including parameters included in the generation command of the second LU 380.

In an embodiment, in operation 430, the storage device driver 210 may deliver the generation UFS command of the second LU 380 to a LU management unit 350.

According to an embodiment, in operation 440, the LU management unit 350 may generate the second LU 380. For example, the LU management unit 350 may generate the second LU 380 based on the generation UFS command. For example, the LU management unit 350 may generate the second LU 380 based on parameters included in the generation UFS command.

In an embodiment, the LU management unit 350 may set an address space (or access address space) corresponding to the maximum virtual capacity.

In an embodiment, in operation 450, the LU management unit 350 may transmit a response to the generation UFS command to the storage device driver 210. For example, the LU management unit 350 may transmit a response including a generation result of the second LU 380 to the storage device driver 210.

In an embodiment, in operation 460, the storage device driver 210 may generate the second LU block module 330. For example, the storage device driver 210 may generate the second LU block module 330 including a second LU descriptor 331 in which parameters as illustrated in Table 4 below are set. According to an embodiment, the second LU block module 330 of a host device 201 is an abstraction of the second LU 380 of the storage device 205, and the second LU block module 330 may be generated after the second LU 380 is generated.

**[Table 4]**

| PARAMETER NAME | PARAMETER VALUE |
|---|---|
| VLU_type | SLU |
| VLU_ID | slu0 |
| memory_type | SLC |
| PLU | plu0 |
| persistence | 1 |
| granularity | 4MB |
| virtual_capacity | 3GB |
| allocated_capacity | 0 |

For example, the second LU descriptor 331 may set parameters of the second LU 380 whose virtual LU (VLU) type is SLU, an ID of VLU is slu0 (i.e., the second LU 380), an ID of dependent PLU is plu0 (i.e., the first LU 370), a capacity allocation unit is 4 MB, a maximum virtual capacity is 3 GB, a currently allocated capacity is 0, and are maintained even when the electronic device 101 is terminated.

According to an embodiment, the storage device driver 210 may transmit a response to the generation command to the first LU block module 320. The storage device driver 210 may transmit a response including the generation result of the second LU 380 to the first LU block module 320. In an embodiment, the first LU block module 320 may update a first LU descriptor 321 based on the generation result of the second LU 380. For example, the first LU block module 320 may update the first LU descriptor 321 as illustrated in Table 5 below.

**[Table 5]**

| PARAMETER NAME | PARAMETER INFORMATION |
|---|---|
| VLU_type | PLU |
| VLU_ID | plu0 |
| memory_type | TLC |
| SLU | slu0 |
| SLU_reserve | 0 |

For example, as the second LU 380 dependent on the first LU 370 is generated, in the first LU descriptor 321, a value of the parameter SLU may be set to slu0, and a value of the parameter SLU_reserve may be updated to 0.

Hereinafter, an operation of allocating a capacity to the second LU 380 by the electronic device 101 will be described.

FIG. 5A illustrates an example of an operation of an electronic device 101 according to an embodiment. FIG. 5B illustrates an example of capacity allocation according to an embodiment.

FIGS. 5A and 5B may be described with reference to FIGS. 1, 2, 3, and 4. The approach described with respect to Figure 5 and also the other approaches for memory allocation in this disclosure may be used to dynamically allocate memory resources to logical partitions whilst maintaining data stored on the existing logical partitions.

FIGS. 5A and 5B may illustrate a situation after a second LU 380 and a second LU block module 330 are generated according to FIG. 4. However, it is not limited thereto. Operations of FIGS. 5A and 5B may be initiated when a designated condition is satisfied. For example, the operations of FIGS. 5A and 5B may be initiated when an application 146 needs memory optimization according to need of capacity secure, user settings, and a usage pattern of a user. For example, in case that the application 146 needs to secure additional capacity (e.g., in case that an available capacity of the first LU 370 is less than or equal to a designated available capacity), the operations of FIGS. 5A and 5B may be initiated. For example, the application 146 may initiate the operations of FIGS. 5A and 5B in a designated environment (e.g., when performing a user-designated operation) according to the user settings. For example, in case (e.g., downloading a large file) that the application 146 needs to secure additional capacity according to the usage pattern of the user, the operations of FIGS. 5A and 5B may be initiated.

In an embodiment, the application 146 may generate a command (or request) related to the second LU block module 330. For example, the application 146 may generate a capacity allocation command of the second LU block module 330. For example, the application 146 may generate a capacity allocation command including parameters for capacity allocation of the second LU 380. However, it is not limited thereto. For example, the command (or request) related to the second LU block module 330 may be generated by another component (e.g., middleware 144 and/or operating system 142) (or kernel) in a program 140 of the electronic device 101.

In an embodiment, the application 146 (or the other components (e.g., the middleware 144, and/or the operating system 142) (or kernel) in the program 140) may generate a command (or request) related to the block module 330 when the designated condition is satisfied. For example, the application 146 may generate the command (or request) related to the block module 330 when memory optimization is needed according to lack of available capacity, user settings, and the usage pattern of the user. For example, in case that the available capacity of the first LU 370 is less than or equal to the designated capacity but there is additional capacity in the memory unit 390 not allocated to the first LU 370, the application 146 may generate the capacity allocation command of the second LU block module 330. For example, the application 146 may generate the capacity allocation command of the second LU block module 330 in the designated environment (e.g., when performing the user-designated operation) according to the user settings. For example, in case (e.g., downloading a large file) that an additional capacity secure is needed according to the usage pattern of the user, the application 146 may generate the capacity allocation command of the second LU block module 330.

In an embodiment, the application 146 may set parameters for the capacity allocation of the second LU 380 as illustrated in Table 6 below.

**[Table 6]**

| PARAMETER NAME | PARAMETER VALUE |
|---|---|
| VLU_ID | slu0 |
| size | 1GB |

For example, the application 146 may set parameters for capacity allocation of the second LU 380 where an ID of VLU is slu0 (i.e., the second LU 380) and an allocation request capacity is 1 GB. For example, 1GB of capacity for allocating to the second LU 380 that operates as SLC may correspond to 3GB of capacity of the first LU 370 that operates as TLC.

In an embodiment, the application 146 may deliver the capacity allocation command of the second LU 380 to a first LU block module 320. For example, in operation 511, the application 146 may deliver the capacity allocation command of the second LU 380 to a file system 310, and in operation 513, the file system 310 may deliver the capacity allocation command of the second LU 380 to the first LU block module 320. In an embodiment, the capacity allocation command of the file system 310 may include information on a capacity (or a capacity of a memory area in which data is not stored) available in the first LU 370. However, it is not limited thereto.

In an embodiment, in operation 521, the first LU block module 320 may obtain information on the capacity allocation unit (e.g., 4 MB) of the second LU 380 from the second LU block module 330. For example, the first LU block module 320 may request information on the capacity allocation unit (e.g., 4 MB) from the second LU block module 330, and in response to the request, the second LU block module 330 may deliver the information on the capacity allocation unit (e.g., 4 MB) to the first LU block module 320.

In an embodiment, the first LU block module 320 may determine whether capacity allocation to the second LU 380 is possible based on a capacity (or a capacity of the memory area in which data is not stored) available in the first LU 370. In an embodiment, information on the available capacity (or the capacity of the memory area in which data is not stored) in the first LU 370 may be delivered from the file system 310 to the first LU 370.

In an embodiment, the first LU block module 320 may determine that capacity allocation to the second LU 380 is possible, in a case where the capacity available in the first LU 370 is greater than or equal to the allocation request capacity, a case where the capacity available in the first LU 370 is greater than or equal to a capacity obtained by adding allocation request capacity and pre-allocated capacity to the second LU 380, or a case where the capacity available in the first LU 370 is greater than or equal to a capacity obtained by adding a converted allocation request capacity and the pre-allocated capacity to the second LU 380. Herein, the converted allocation request capacity may be a capacity in which the allocation request capacity is converted based on the capacity allocation unit. For example, in case that the allocation request capacity is less than the capacity allocation unit, the converted allocation request capacity may correspond to the capacity allocation unit. For example, when the allocation request capacity is divided by the capacity allocation unit, in case that there is a remainder exceeding zero, a capacity less than or equal to the capacity allocation unit may be added to the converted allocation request capacity. For example, in case that the allocation request capacity is 5 MB and the capacity allocation unit is 4 MB, the converted allocation request capacity may be 8 MB. According to an embodiment, in case that capacity allocation of a memory unit 390 to the second LU 380 is needed, a capacity of the memory unit 390 allocated to the first LU 370 may be borrowed. In an embodiment, the file system 310 (or primary LU file system (PLUFS)) may manage the first LU 370. In an embodiment, the file system 310 may manage the total sum of capacities allocated to the first LU 370 and the second LU 380 not to exceed the capacity of the memory unit 390. In an embodiment, the file system 310 may calculate a final available capacity based on a capacity obtained by adding the total capacity (slu_reserve) allocated to LUs (e.g., the first LU 370 and/or one or more second LUs 380) to a reservation space (fs_reserve) capacity of the file system 310 when calculating the available capacity for the capacity allocation request of the application 146. For example, the final available capacity may be calculated by subtracting the summed capacity (i.e., fs_reserve+slu_reserve) from the available capacity of the file system 310.

In an embodiment, the file system 310 may manage the sum of the capacity allocated to the second LU 380 so that does not exceed the total capacity of the first LU in order to allocate a part of the memory space of the first LU 370 to the second LU 380 without additional capacity allocation to the second LU 380.

In an embodiment, in case that the capacity available in the first LU 370 is less than the allocation request capacity, the first LU block module 320 may determine that capacity allocation to the second LU 380 is not possible. In an embodiment, when it is determined that capacity allocation is not possible, the first LU block module 320 may return a failure of capacity allocation to the application 146.

In an embodiment, in operation 525, the first LU block module 320 may deliver the capacity allocation command to a storage device driver 210. In an embodiment, when it is determined that capacity allocation is possible, the first LU block module 320 may deliver the capacity allocation command to the storage device driver 210.

In an embodiment, the storage device driver 210 may generate a UFS command for the capacity allocation of the second LU 380. Hereinafter, the UFS command for the capacity allocation of the LU may be referred to as an allocation UFS command.

In an embodiment, the storage device driver 210 may generate the allocation UFS command based on parameters included in the capacity allocation command of the second LU 380. In an embodiment, the storage device driver 210 may generate the allocation UFS command including the parameters included in the capacity allocation command of the second LU 380.

In an embodiment, in operation 531, the storage device driver 210 may deliver the allocation UFS command of the second LU 380 to a resource distributor 360.

Referring to FIG. 5B, the resource distributor 360 may release (or subtract), in the first LU 370, the allocation of a memory area 593 corresponding to the allocation request capacity among entire memory areas 591 and 593 of the memory unit 390. In an embodiment, the resource distributor 360 may release (or subtract), in the first LU 370, the allocation of the memory area 593 corresponding to a virtual memory area 573 among entire virtual memory areas 571 and 573 of the first LU 370. The resource distributor 360 may allocate the memory area 593 corresponding to the allocation request capacity among the entire memory areas 591 and 593 of the memory unit 390 to the second LU 380. For example, the resource distributor 360 may allocate the memory area 593 corresponding to the allocation request capacity from the memory unit 390 allocated to the first LU 370 to the second LU 380. In an embodiment, the resource distributor 360 may allocate the memory area 593 to a virtual memory area 581 among entire virtual memory areas 581 and 583 of the second LU 380.

In FIG. 5B, the virtual memory area 573 may have a capacity of 3GB of the first LU 370 which is the TLC, and the virtual memory area 581 may have a capacity of 1GB of the second LU 380 which is the SLC. The memory area 593 of the memory unit 390 operating as the TLC may operate as the SLC by being allocated to the second LU 380. According to an embodiment, in a case of a flash storage device, the number of storable bits may be different for each unit memory cell. For example, in a case of dividing a voltage level of a unit memory cell into two areas, the unit memory cell may be considered to store one bit information (i.e. SLC). For example, in a case of dividing the voltage level of the unit memory cell into four areas, the unit memory cell may be considered to store two bit information (e.g. MLC). For example, in a case of dividing the voltage level of the unit memory cell into eight areas, the unit memory cell may be considered to store three bit information (e.g. TLC). According to the number of bits stored in the unit memory cell, the unit memory cell may be divided into SLC, MLC, TLC, or a higher level cell (e.g., QLC). Therefore, the number of memory cells required for a capacity of 3GB of the TLC may be the same as the number of memory cells required for a capacity of 1GB of the SLC. Accordingly, in order to allocate 1GB to the second LU 380, which operates as the SLC, the capacity of 3GB allocated to the first LU 370, which operates as the TLC, may be required.

Referring again to FIG. 5A, in operation 535, the resource distributor 360 may transmit a response for the allocation UFS command to the storage device driver 210. The resource distributor 360 may transmit an allocation result of the second LU 380 to the storage device driver 210.

In an embodiment, in operation 540, the storage device driver 210 may transmit a response including the allocation result to the first LU block module 320. The storage device driver 210 may transmit the capacity allocation result of the second LU 380 to the first LU block module 320.

In an embodiment, the first LU block module 320 may update a first LU descriptor 321. In an embodiment, the first LU block module 320 may update the first LU descriptor 321 based on the capacity allocation result. For example, the first LU block module 320 may update the first LU descriptor 321 as illustrated in Table 7 below.

**[Table 7]**

| PARAMETER NAME | PARAMETER VALUE |
|---|---|
| VLU_type | PLU |
| VLU_ID | plu0 |
| memory_type | TLC |
| SLU | slu0 |
| SLU_reserve | 3GB |

For example, as 1GB (or 3GB based on TLC) is allocated to the second LU 380 dependent on the first LU 370, the value of a parameter SLU_reserve of the first LU descriptor 321 may be updated to 3GB.

In an embodiment, in operation 550, the first LU block module 320 may request the second LU block module 330 to update the second LU descriptor 331. The storage device driver 210 may transmit a request including the capacity allocation result of the second LU 380 to the first LU block module 320.

In an embodiment, the second LU block module 330 may update the second LU descriptor 331. In an embodiment, the second LU block module 330 may update the second LU descriptor 331 based on the capacity allocation result. For example, the second LU block module 330 may update the second LU descriptor 331 as illustrated in Table 8 below.

**[Table 8]**

| PARAMETER NAME | PARAMETER VALUE |
|---|---|
| VLU_type | SLU |
| VLU_ID | slu0 |
| memory_type | SLC |
| PLU | plu0 |
| persistence | 1 |
| granularity | 4MB |
| virtual_capacity | 3GB |
| allocated_capacity | 1GB |

For example, the second LU descriptor 331 may update the currently allocated capacity from 0 to 1 GB (3 GB based on TLC).

According to an embodiment, the first LU block module 320 may transmit a response for the capacity allocation command to the file system 310. The first LU block module 320 may transmit a response including the capacity allocation result of the second LU 380 to the file system 310. In an embodiment, the file system 310 may manage that the virtual memory area 573 of the first LU 370 corresponding to the memory area 593 allocated to the second LU 380 is used through the second LU 380. For example, the file system 310 may manage the total capacity used through the first LU 370 and the second LU 380 not to exceed the entire memory areas 591 and 593 of the memory unit 390.

According to an embodiment, the first LU block module 320 may transmit a response for the capacity allocation command to the application 146. The first LU block module 320 may transmit a response including the capacity allocation result of the second LU 380 to the application 146.

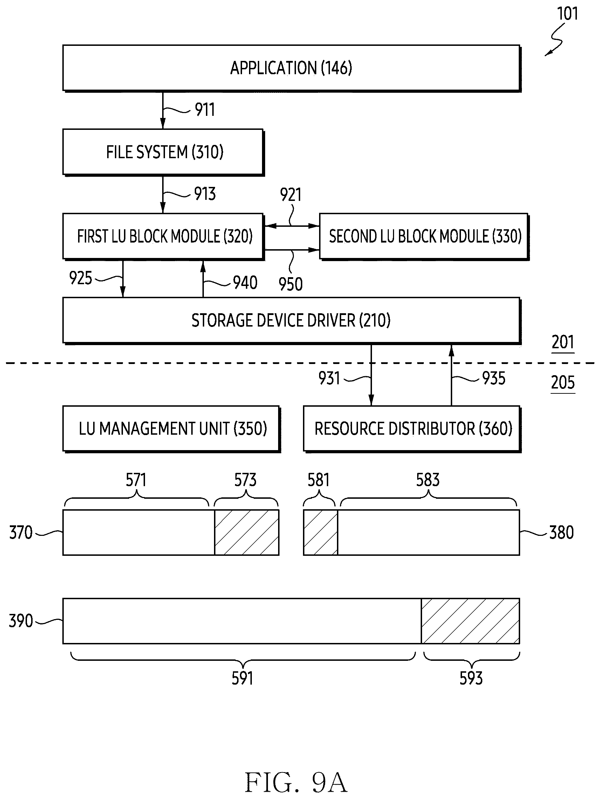

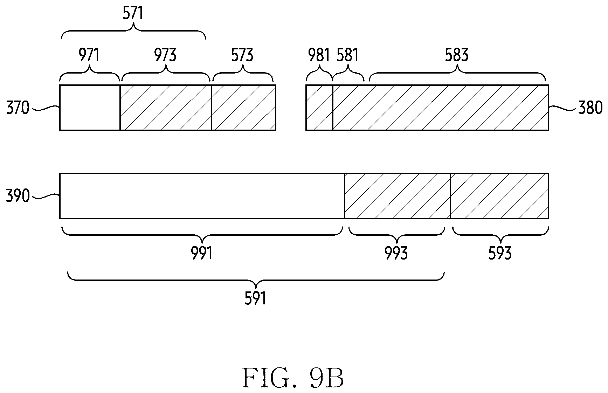

According to an embodiment, the application 146 may generate a capacity allocation command exceeding the maximum virtual capacity of the second LU 380. In an embodiment, the first LU block module 320 may increase the maximum virtual capacity of the second LU 380 based on the capacity allocation command exceeding the maximum virtual capacity of the second LU 380. In an embodiment, the first LU block module 320 may allocate a capacity exceeding the maximum virtual capacity of the second LU 380 to an overprovisioning area of the second LU 380 based on the capacity allocation command exceeding the maximum virtual capacity of the second LU 380. Overprovisioning of the second LU 380 may be described with reference to FIGS. 9A and 9B.

According to an embodiment, the electronic device 101 may update a status of the first LU 370 and/or the second LU 380 displayed to the user. For example, the electronic device 101 may display a state in which the in-use capacity of the first LU 370 is increased by the capacity allocated to the second LU 380 on a display module 160. Accordingly, the user may recognize that the total capacity of the first LU 370 is not reduced even though the capacity is allocated to the second LU 380 and the second LU 380 uses SLC instead of TLC. Consequently, the total physical capacity of the memory unit 390 indicated to the user may be unchanged whilst still accurately representing the available capacity and in-use capacity of the memory unit 390. In other words, the physical memory resource is allocated from the first LU 370 to the second LU 380 but the capacity allocated to the second LU 380 is not deducted the display capacity of the primary LU but instead the allocated capacity is prohibited from being used by the first LU370.

Hereinafter, an operation of allocation release of the capacity of the second LU 380 by the electronic device 101 will be described.

FIG. 6A illustrates an example of an operation of an electronic device 101 according to an embodiment. FIG. 6B illustrates an example of capacity allocation release according to an embodiment. FIG. 6C illustrates an example of capacity allocation release according to an embodiment.

FIGS. 6A, 6B, and 6C may be described with reference to FIGS. 1, 2, 3, 4, 5A, and 5B.

FIGS. 6A, 6B, and 6C may illustrate a situation after a capacity is allocated to a second LU 380 according to FIGS. 5A and 5B. However, it is not limited thereto. Operations of FIG. 6A may be initiated when a designated condition is satisfied. For example, the operations of FIG. 6A may be initiated when memory optimization is needed according to insufficient capacity, user settings, and user usage pattern. For example, the application 146 may initiate the operations of FIG. 6A in case that the available capacity of the first LU 370 is less than or equal to a designated capacity. For example, the application 146 may initiate the operations of FIG. 6A in a designated environment (e.g., when performing a user-designated operation) according to the user's setting. For example, in case that the application 146 needs to secure additional capacity according to the user's usage pattern (e.g., downloading a large file), the operations of FIG. 6A may be initiated.

In an embodiment, the application 146 may generate a command (or request) related to a second LU block module 330. For example, the application 146 may generate a capacity allocation release command of the second LU block module 330. For example, the application 146 may generate a capacity allocation release command including parameters for capacity allocation release of the second LU 380. In an embodiment, the application 146 may set parameters for the capacity allocation release of the second LU 380 as illustrated in Table 9 below. However, it is not limited thereto. For example, the command (or request) related to the second LU block module 330 may be generated by another component (e.g., the middleware 144 and/or the operating system 142) (or kernel) in a program 140 of the electronic device 101.

**[Table 9]**

| PARAMETER NAME | PARAMETER VALUE |
|---|---|
| VLU_ID | slu0 |
| Size | 500MB |

For example, the application 146 may set parameters for capacity allocation release of the second LU 380 whose ID of VLU is slu0 (i.e., the second LU 380) and an allocation release request capacity is 500 MB. For example, 500 MB of capacity for allocating to the second LU 380 that operates as SLC may correspond to 1.5 GB of capacity of the first LU 370 that operates as TLC.

In an embodiment, the application 146 may deliver a capacity allocation release command of the second LU 380 to a first LU block module 320. For example, in operation 611, the application 146 may deliver the capacity allocation release command of the second LU 380 to a file system 310, and in operation 613, the file system 310 may deliver the capacity allocation release command of the second LU 380 to the first LU block module 320. However, it is not limited thereto. For example, the application 146 may directly deliver the capacity allocation release command of the second LU 380 to the first LU block module 320.

In an embodiment, in operation 621, the first LU block module 320 may obtain information on a capacity allocation unit (e.g., 4 MB) of the second LU 380 from the second LU block module 330. For example, the first LU block module 320 may request information on the capacity allocation unit (e.g., 4 MB) from the second LU block module 330, and in response to the request, the second LU block module 330 may deliver the information on the capacity allocation unit (e.g., 4 MB) to the first LU block module 320.

In an embodiment, in operation 625, the first LU block module 320 may deliver the capacity allocation release command or a converted allocation release command to a storage device driver 210. Herein, the converted allocation release request capacity may be a capacity in which the allocation release request capacity is converted based on the capacity allocation unit. For example, in case that the allocation release request capacity is less than the capacity allocation unit, the converted allocation release request capacity may be zero. For example, when the allocation release request capacity is divided by the capacity allocation unit, in case that there is a remainder exceeding zero, a capacity less than or equal to the capacity allocation unit may be reduced in the converted allocation release request capacity. For example, in case that the allocation release request capacity is 6 MB and the capacity allocation unit is 4 MB, the converted allocation release request capacity may be 4 MB.

In an embodiment, the storage device driver 210 may generate a UFS command for capacity allocation release of the second LU 380. Hereinafter, the UFS command for the capacity allocation release of the LU may be referred to as a release UFS command.

In an embodiment, the storage device driver 210 may generate the release UFS command based on parameters included in the capacity allocation release command of the second LU 380. In an embodiment, the storage device driver 210 may generate the release UFS command including parameters included in the capacity allocation release command of the second LU 380.

In an embodiment, in operation 631, the storage device driver 210 may deliver the release UFS command of the second LU 380 to a resource distributor 360.

Referring to FIG. 6B, the resource distributor 360 may release (or subtract), in the second LU 380, an allocation of a memory area 691 corresponding to the allocation release request capacity among entire memory areas 591 and 593 of a memory unit 390. According to an embodiment, the resource distributor 360 may release (or subtract), in the second LU 380, the allocation of the memory area 691 corresponding to a virtual memory area 683 among a virtual memory area 581 of the second LU 380. The resource distributor 360 may allocate the memory area 691 corresponding to the allocation release request capacity among the entire memory areas 591 and 593 of the memory unit 390 to the first LU 370. For example, the resource distributor 360 may allocate the memory area 691 corresponding to the allocation release request capacity from the memory unit 390 allocated to the second LU 380 to the first LU 370. In an embodiment, the resource distributor 360 may allocate the memory area 691 to a virtual memory area 671 among entire virtual memory areas 571 and 573 of the first LU 370.

In FIG. 6B, the virtual memory area 671 may have a capacity of 1.5 GB of the first LU 370 which is the TLC, and a virtual memory area 681 may have a capacity of 500 MB of the second LU 380 which is the SLC. The memory area 691 of the memory unit 390 that operates as the SLC may operate as the TLC by being allocated to the first LU 370.

Referring to FIG. 6C, as a result of the allocation release, the memory areas 591 and 691 of the memory unit 390 may be allocated to the virtual memory areas 571 and 671 of the first LU 370, and a memory area 693 may be allocated to the virtual memory area 681 of the second LU 380. The memory area 693 of the memory unit 390 corresponding to a virtual memory area 673 of the first LU 370 may be allocated to the virtual memory area 681 of the second LU 380.

Referring again to FIG. 6A, in operation 635, the resource distributor 360 may transmit a response for the release UFS command to the storage device driver 210. The resource distributor 360 may transmit an allocation release result of the second LU 380 to the storage device driver 210.

In an embodiment, in operation 640, the storage device driver 210 may transmit a response including the allocation release result to the first LU block module 320. The storage device driver 210 may transmit a capacity allocation release result of the second LU 380 to the first LU block module 320.

In an embodiment, the first LU block module 320 may update a first LU descriptor 321. In an embodiment, the first LU block module 320 may update the first LU descriptor 321 based on the capacity allocation release result. For example, the first LU block module 320 may update the first LU descriptor 321 as illustrated in Table 10 below.

**[Table 10]**

| PARAMETER NAME | PARAMETER VALUE |
|---|---|
| VLU_type | PLU |
| VLU_ID | plu0 |
| memory_type | TLC |
| SLU | slu0 |
| SLU_reserve | 1.5GB |

For example, as allocation of 500 MB (or 1.5 GB based on TLC) is released from the second LU 380 dependent on the first LU 370, the value of the parameter SLU_reserve of the first LU descriptor 321 may be updated from 3 GB to 1.5 GB.

In an embodiment, in operation 650, the first LU block module 320 may request the second LU block module 330 to update a second LU descriptor 331. The storage device driver 210 may transmit a request including the capacity allocation release result of the second LU 380 to the first LU block module 320.

In an embodiment, the second LU block module 330 may update the second LU descriptor 331. In an embodiment, the second LU block module 330 may update the second LU descriptor 331 based on the capacity allocation release result. For example, the second LU block module 330 may update the second LU descriptor 331 as illustrated in Table 11 below.

**[Table 11]**

| PARAMETER NAME | PARAMETER VALUE |
|---|---|
| VLU_type | SLU |
| VLU_ID | slu0 |
| memory_type | SLC |
| PLU | plu0 |
| persistence | 1 |
| granularity | 4MB |
| virtual_capacity | 3GB |
| allocated_capacity | 500MB |

For example, the second LU descriptor 331 may update the currently allocated capacity from 1 GB to 500 MB (1.5 GB based on TLC).

According to an embodiment, the first LU block module 320 may transmit a response to the capacity allocation release command to the file system 310. The first LU block module 320 may transmit a response including the capacity allocation release result of the second LU 380 to the file system 310. In an embodiment, the file system 310 may allow access to the virtual memory area 671 of the first LU 370 corresponding to the memory area 691 released from allocation to the second LU 380. For example, the file system 310 may allow an IOR for the virtual memory area 671 of the first LU 370.

According to an embodiment, the first LU block module 320 may transmit a response for the capacity allocation release command to the application 146. The first LU block module 320 may transmit a response including the capacity allocation release result of the second LU 380 to the application 146.

According to an embodiment, the electronic device 101 may update a status of the first LU 370 and/or the second LU 380 displayed to a user. For example, the electronic device 101 may display information on the available capacity of the first LU 370 and/or the second LU 380 on a display module 160 based on capacity information of the first LU 370 and/or the second LU 380 obtained through the file system 310. For example, the electronic device 101 may display on the display module 160 a state in which the in-use capacity of the first LU 370 is reduced by the allocation released capacity from the second LU 380 based on the capacity information obtained through the file system 310. In other words, the amount of memory released from the second LU 380 is now available again in the first LU 370 and therefore the amount of released memory when using the TLC of the first LU 370 is indicated as now being available in the first LU 370 e.g. 1.5GB is added to the available memory of the first LU 370 (TLC) when 0.5GB is released from the second LU 380 (SLC).

According to an embodiment, the resource distributor 360 may obtain a discard command for a partial area 683 of the second LU 380. According to an embodiment, the resource distributor 360 may release allocation of the memory area 691 corresponding to the virtual memory area 683 of the discard-requested second LU 380. In an embodiment, in case that valid data is not stored in the memory area 691 corresponding to the virtual memory area 683 of the discard-requested second LU 380, the resource distributor 360 may release allocation of the discard-requested memory area 691. According to an embodiment, the resource distributor 360 may allocate the discard-requested memory area 691 to the virtual memory area 671 of the first LU 370.

Hereinafter, an operation in which the electronic device 101 processes an input-output request (IOR) to the second LU 380 will be described.

FIG. 7 illustrates an example of an operation of an electronic device 101 according to an embodiment.

FIG. 7 may be described with reference to FIGS. 1, 2, 3, 4, 5A, and 5B.

FIG. 7 may illustrate a situation after a capacity is allocated to a second LU 380 according to FIGS. 5A and 5B.

In an embodiment, an application 146 may generate an input-output request (IOR) related to a second LU block module 330. For example, the application 146 may generate a read request for the second LU block module 330. For example, the application 146 may generate a read request for data stored in the second LU 380. For example, the read request may include information on an address of the second LU 380 where data is stored. For example, the application 146 may generate a write request for the second LU block module 330. For example, the application 146 may generate a write request for data to the second LU 380. For example, the write request may include information on an address of the second LU 380 where data will be stored. Hereinafter, a write request for the second LU 380 capable of performing explicit write processing may be referred to as an explicit write request. In addition, a write request for the second LU 380 that does not perform explicit write processing (or performs implicit write processing) may be referred to as an implicit write request.

In an embodiment, the application 146 may deliver an IOR (e.g., a read request, an explicit write request, or an implicit write request) for the second LU 380 to the second LU block module 330. For example, in operation 710, the application 146 may deliver the IOR for the second LU 380 to the second LU block module 330. However, it is not limited thereto. For example, the application 146 may deliver the IOR for the second LU 380 to a virtual file system, and the virtual file system may deliver the IOR for the second LU 380 to the second LU block module 330. Herein, the virtual file system may be distinguished from the file system 310. In an embodiment, the virtual file system may be a file system mounted for the second LU 380. In an embodiment, the virtual file system may recognize that the second LU 380 is a virtual LU based on information indicating that the second LU 380 is a virtual LU.

In an embodiment, in operation 720, the second LU block module 330 may deliver the IOR to the storage device driver 210.

In an embodiment, the storage device driver 210 may generate a UFS command for input and output with respect to the second LU 380. Hereinafter, the UFS command for input and output with respect to the LU may be referred to as an IO UFS command.

In an embodiment, the storage device driver 210 may generate the IO UFS command based on parameters included in the IOR of the second LU 380. In an embodiment, the storage device driver 210 may generate the IO UFS command including parameters included in the IOR of the second LU 380. For example, the storage device driver 210 may generate the IO UFS command including address information of the second LU 380 included in the read request. For example, the storage device driver 210 may generate the IO UFS command including data included in the write request or the address of the second LU 380 included in the write request.

In an embodiment, in operation 730, the storage device driver 210 may deliver the IO UFS command of the second LU 380 to an LU management unit 350.

In an embodiment, the LU management unit 350 may process the IO UFS command. In an embodiment, the LU management unit 350 may process the IO UFS command for the second LU block module 330.

In an embodiment, the LU management unit 350 may read data of the address of the second LU 380 included in the IO UFS command based on the IO UFS command based on the read request. In an embodiment, in operation 740, the LU management unit 350 may return the data read according to the IO UFS command to the storage device driver 210. In an embodiment, in case that an area of a memory unit 390 is not allocated to the address of the second LU 380, the LU management unit 350 may return designated data (e.g., 0 (or zero data)) to the storage device driver 210. In an embodiment, in case that an area of the memory unit 390 is not allocated to the address of the second LU 380, the LU management unit 350 may return a response indicating that the read has failed to the storage device driver 210. In an embodiment, in case that the area of the memory unit 390 is allocated to the address of the second LU 380, the LU management unit 350 may return a response including the read data to the storage device driver 210.

In an embodiment, the LU management unit 350 may write data to the address of the second LU 380 included in the IO UFS command based on the IO UFS command based on the write request. In an embodiment, in operation 740, the LU management unit 350 may transmit a response including a write result to the storage device driver 210 according to the IO UFS command. In an embodiment, in case that the area of the memory unit 390 is not allocated to the address of the second LU 380, the LU management unit 350 may return a response (or an insufficient capacity error) indicating a failure of writing data to the storage device driver 210. In an embodiment, in case that the area of the memory unit 390 is allocated to the address of the second LU 380, the LU management unit 350 may return a response indicating success of writing data to the storage device driver 210. In an embodiment, in case that the area of the memory unit 390 is allocated to the address of the second LU 380 and writing data to a memory of an actual corresponding address is successful, the LU management unit 350 may return a response indicating the success of writing data to the storage device driver 210.

In an embodiment, in operation 750, the storage device driver 210 may transmit a response indicating a result of the IOR to the second LU block module 330. The storage device driver 210 may transmit a response indicating a result of the read request to the second LU block module 330. The storage device driver 210 may transmit a response indicating a result of the write request to the second LU block module 330.

In an embodiment, in operation 760, the second LU block module 330 may transmit the response indicating the result of the IOR to the application 146. The second LU block module 330 may transmit the response indicating the result of the read request to the application 146. The second LU block module 330 may transmit the response indicating the result of the write request to the application 146.

According to an embodiment, the second LU block module 330 may store the response indicating the result of the IOR. For example, the second LU block module 330 may store information on an address space of the second LU 380 to which the area of the memory unit 390 is allocated. For example, the second LU block module 330 may store information on an address where reading and/or writing has failed. For example, the second LU block module 330 may store information on an address where reading and/or writing was successful.

According to an embodiment, the application 146 may deliver the IOR (e.g., the read request, the explicit write request, or the implicit write request) for the second LU 380 to the second LU block module 330. The second LU block module 330 may process the IOR (e.g., the read request, the explicit write request, or the implicit write request) based on stored information on the address space of the second LU 380. For example, in a case of the IOR (e.g., the read request, the explicit write request, or the implicit write request) for the address of the second LU 380 to which the area of the memory unit 390 is not allocated, the second LU block module 330 may transmit a response (or an insufficient capacity error) indicating that an input and output has failed to the application 146. According to an embodiment, in a case of the IOR (e.g., the read request, the explicit write request, or the implicit write request) for the address of the second LU 380 to which the area of the memory unit 390 is allocated, the second LU block module 330 may deliver the IOR to the storage device driver 210.

According to an embodiment, the second LU block module 330 may allocate a capacity to the second LU 380 in response to receiving a response indicating that the implicit write has failed from the storage device driver 210. Operation of explicitly or implicitly allocating the capacity to the second LU 380 in response to the failure of the implicit write may be described with reference to FIGS. 8A and 8B.

Hereinafter, an operation of allocating an additional capacity to the second LU 380 by the electronic device 101 will be described.

FIG. 8A illustrates an example of an operation of an electronic device 101 according to an embodiment. FIG. 8B illustrates an example of capacity allocation according to an embodiment.

FIGS. 8A and 8B may be described with reference to FIGS. 1, 2, 3, 4, 5A, 5B, and 7.

According to operation 710 of FIG. 7, FIGS. 8A and 8B may illustrate a situation after a second LU block module 330 obtains an implicit write request for a second LU 380 from an application 146. However, it is not limited thereto. According to operation 750 of FIG. 7, FIGS. 8A and 8B may illustrate a situation after the second LU block module 330 obtains a response indicating a failure with respect to the implicit write request for the second LU 380 from a storage device driver 210.

In an embodiment, the second LU block module 330 may identify an additional allocation request capacity for the implicit write request. In an embodiment, the second LU block module 330 may identify the additional allocation request capacity for the implicit write request based on a capacity allocation unit (e.g., 4 MB) of the second LU 380. Herein, the additional allocation request capacity may be a capacity in which a size of data for writing is converted based on the capacity allocation unit. For example, in case that the size of the data for writing is less than the capacity allocation unit, the additional allocation request capacity may correspond to the capacity allocation unit. For example, when the size of the data for writing is divided by the capacity allocation unit, in case that there is a remainder exceeding zero, a capacity less than or equal to the capacity allocation unit may be added to the additional allocation request capacity. For example, in case that the size of the data for writing is 5 MB and the capacity allocation unit is 4 MB, the additional allocation request capacity may be 8 MB.

In an embodiment, the second LU block module 330 may deliver an additional capacity allocation command of the second LU 380 to a first LU block module 320. For example, in operation 810, the second LU block module 330 may deliver the additional capacity allocation command of the second LU 380 to the first LU block module 320.

In an embodiment, in operation 821, the first LU block module 320 may obtain information on an available capacity in a first LU 370 from a file system 310. In an embodiment, the first LU block module 320 may determine whether additional capacity allocation for the second LU 380 is possible based on the available capacity (or a capacity of an area in which data is not stored) in the first LU 370.

In an embodiment, the first LU block module 320 may determine that the capacity allocation for the second LU 380 is possible, in case that the available capacity in the first LU 370 is greater than or equal to the additional allocation request capacity. In an embodiment, the first LU block module 320 may determine that the capacity allocation for the second LU 380 is possible, in case that the available capacity in the first LU 370 is greater than or equal to the additional allocation request capacity and a capacity of adding the pre-allocated capacity to the second LU 380.

In an embodiment, in case that the available capacity in the first LU 370 is less than the additional allocation request capacity, the first LU block module 320 may determine that capacity allocation for the second LU 380 is not possible. In an embodiment, in case that the available capacity in the first LU 370 is less than the additional allocation request capacity and the capacity obtained by adding the pre-allocated capacity to the second LU 380, the first LU block module 320 may determine that the capacity allocation for the second LU 380 is not possible. In an embodiment, when it is determined that additional capacity allocation is not possible, the first LU block module 320 may return a failure of additional capacity allocation to the second LU block module 330. In an embodiment, the second LU block module 330 may return a failure of the implicit write to the application 146 based on receiving a response indicating a failure in capacity allocation.

In an embodiment, in operation 823, the first LU block module 320 may deliver an additional capacity allocation command to the storage device driver 210. In an embodiment, when it is determined that additional capacity allocation is possible, the first LU block module 320 may deliver the additional capacity allocation command to the storage device driver 210.

In an embodiment, the storage device driver 210 may generate a UFS command for additional capacity allocation of the second LU 380. Hereinafter, the UFS command for additional capacity allocation of the LU may be referred to as an additional allocation UFS command.

In an embodiment, the storage device driver 210 may generate the additional allocation UFS command based on parameters included in the additional capacity allocation command of the second LU 380. In an embodiment, the storage device driver 210 may generate the additional allocation UFS command including parameters included in the additional capacity allocation command of the second LU 380. For example, the parameters included in the additional capacity allocation command may include an ID (i.e., slu0) of VLU to which a capacity is additionally allocated, and the additional allocation request capacity (i.e., the size of the data for implicit write).

In an embodiment, in operation 825, the storage device driver 210 may deliver the additional allocation UFS command of the second LU 380 to a resource distributor 360.

Referring to FIG. 8B, the resource distributor 360 may release (or subtract), from the first LU 370, an allocation of a memory area 893 corresponding to the additional allocation request capacity among entire memory areas 591 and 593 of a memory unit 390. In an embodiment, the resource distributor 360 may release (or subtract), from the first LU 370, the allocation of the memory area 893 corresponding to a virtual memory area 873 among entire virtual memory areas 571 and 573 of the first LU 370. The resource distributor 360 may allocate the memory area 893 corresponding to the additional allocation request capacity among the entire memory areas 591 and 593 of the memory unit 390 to the second LU 380. For example, the resource distributor 360 may allocate the memory area 893 corresponding to the additional allocation request capacity from the memory unit 390 allocated to the first LU 370 to the second LU 380. According to an embodiment, the resource distributor 360 may allocate the memory area 893 to a virtual memory area 881 among entire virtual memory areas 581 and 583 of the second LU 380.

In FIG. 8B, as a result of the additional capacity allocation, a memory area 891 of the memory unit 390 may be allocated to a virtual memory area 871 of the first LU 370, and the memory areas 593 and 893 may be allocated to the virtual memory areas 581 and 881 of the second LU 380. The memory area 893 of the memory unit 390 corresponding to the virtual memory area 873 of the first LU 370 may be allocated to the virtual memory area 881 of the second LU 380. A capacity of the memory unit 390 may not be allocated to a virtual memory area 883 of the second LU 380.

Referring again to FIG. 8A, in operation 827, the resource distributor 360 may transmit a response for the additional allocation UFS command to the storage device driver 210. The resource distributor 360 may transmit the result of the additional capacity allocation of the second LU 380 to the storage device driver 210.

In an embodiment, in operation 829, the storage device driver 210 may transmit a response including the additional capacity allocation result to the first LU block module 320. The storage device driver 210 may transmit the additional capacity allocation result of the second LU 380 to the first LU block module 320.

In an embodiment, the first LU block module 320 may update a first LU descriptor 321. In an embodiment, the first LU block module 320 may update the first LU descriptor 321 based on a capacity allocation result. For example, as an additional capacity is allocated to the second LU 380 dependent on the first LU 370, the first LU descriptor 321 may update a value of a parameter SLU_reserve.

In an embodiment, in operation 831, the first LU block module 320 may transmit a request including the additional capacity allocation result to the second LU block module 330. In an embodiment, the first LU block module 320 may request an update of a second LU descriptor 331.

In an embodiment, the second LU block module 330 may update the second LU descriptor 331. In an embodiment, the second LU block module 330 may update the second LU descriptor 331 based on the capacity allocation result. For example, the second LU descriptor 331 may update the currently allocated capacity.

In an embodiment, the second LU block module 330 may process an implicit write request for the second LU 380 in response to the additional capacity being allocated. For example, the second LU block module 330 may perform an operation of processing an IOR of FIG. 7.

In an embodiment, in operation 833, the second LU block module 330 may deliver the implicit write request to the storage device driver 210.

In an embodiment, the storage device driver 210 may generate a UFS command for implicit write for the second LU 380. Hereinafter, the UFS command for implicit write for the LU may be referred to as an implicit write UFS command.

In an embodiment, the storage device driver 210 may generate the implicit write UFS command based on parameters included in the implicit write request of the second LU 380.

In an embodiment, in operation 835, the storage device driver 210 may deliver the implicit write UFS command of the second LU 380 to an LU management unit 350.

In an embodiment, the LU management unit 350 may process the implicit write UFS command. In an embodiment, the LU management unit 350 may process the implicit write UFS command for the second LU block module 330.

In an embodiment, the LU management unit 350 may write data to the second LU 380 based on the implicit write UFS command. In an embodiment, the LU management unit 350 may write data to an address corresponding to the additional allocation capacity based on the implicit write UFS command. In an embodiment, in operation 837, the LU management unit 350 may transmit a response including a write result to the storage device driver 210 according to the implicit write UFS command.

In an embodiment, in operation 839, the storage device driver 210 may transmit a response indicating a result of the implicit write to the second LU block module 330.

In an embodiment, in operation 840, the second LU block module 330 may transmit the response indicating the result of the implicit write to the application 146.

Hereinafter, an operation of allocating overprovisioning to the second LU 380 by the electronic device 101 will be described.

FIG. 9A illustrates an example of an operation of an electronic device 101 according to an embodiment. FIG. 9B illustrates an example of capacity allocation according to an embodiment.

FIGS. 9A and 9B may be described with reference to FIGS. 1, 2, 3, 4, 5A, and 5B.

FIGS. 9A and 9B may illustrate a situation after a capacity is allocated to a second LU 380 according to FIGS. 5A and 5B.

In an embodiment, an application 146 may generate a command (or request) related to a second LU block module 330. For example, the application 146 may generate a capacity allocation command of the second LU block module 330.

For example, the application 146 may generate a capacity allocation command that exceeds the maximum virtual capacity of the second LU block module 330. For example, the application 146 may generate a capacity allocation command including parameters for capacity allocation of the second LU 380. In an embodiment, the application 146 may set parameters for capacity allocation of the second LU 380 as illustrated in Table 12 below. However, it is not limited thereto. For example, the command (or request) related to the second LU block module 330 may be generated by other components (e.g., the middleware 144 and/or the operating system 142) (or kernel) in a program 140 of the electronic device 101.

**[Table 12]**

| PARAMETER NAME | PARAMETER VALUE |
|---|---|
| VLU_ID | slu0 |
| size | 3GB |
| OP | 0 |

For example, the application 146 may set parameters for capacity allocation indicating that an ID of VLU is slu0 (i.e., the second LU 380), an allocation request capacity is the second LU 380 of 3GB, and is not overprovisioning (OP). For example, 3 GB of capacity for allocating to the second LU 380 that operates as SLC may correspond to 9 GB of capacity of a first LU 370 that operates as TLC.

In an embodiment, the application 146 may deliver the capacity allocation command of the second LU 380 to a first LU block module 320. For example, in operation 911, the application 146 may deliver the capacity allocation command of the second LU 380 to a file system 310, and in operation 913, the file system 310 may deliver the capacity allocation command of the second LU 380 to the first LU block module 320. However, it is not limited thereto. For example, the application 146 may directly deliver the capacity allocation command of the second LU 380 to the first LU block module 320.

In an embodiment, in operation 921, the first LU block module 320 may obtain information on a capacity allocation unit (e.g., 4 MB) of the second LU 380 from the second LU block module 330. For example, the first LU block module 320 may request information on the capacity allocation unit (e.g., 4 MB) from the second LU block module 330, and in response to the request, the second LU block module 330 may deliver information on the capacity allocation unit (e.g., 4 MB) to the first LU block module 320.

In an embodiment, the first LU block module 320 may determine whether a capacity allocation to the second LU 380 is possible, based on an available capacity (or a capacity of an area in which data is not stored) in the first LU 370.

In an embodiment, the first LU block module 320 may determine whether the allocation request capacity exceeds the maximum virtual capacity for the second LU 380. In an embodiment, in case that a capacity allocation for the second LU 380 is possible (i.e. there is sufficient available capacity in the first LU 370), the first LU block module 320 may determine whether the allocation request capacity exceeds the maximum virtual capacity for the second LU 380. In an embodiment, the first LU block module 320 may determine whether an allocable request capacity and a capacity obtained by adding the pre-allocated capacity to the second LU 380 exceed the maximum virtual capacity for the second LU 380.

In an embodiment, the first LU block module 320 may identify a capacity exceeding the maximum virtual capacity of the second LU 380 based on the allocable request capacity. In an embodiment, the first LU block module 320 may identify a capacity exceeding the maximum virtual capacity of the second LU 380 from an allocable request capacity and a capacity obtained by adding the pre-allocated capacity to the second LU 380. In an embodiment, in a case where it is determined that capacity allocation for the second LU 380 is not possible, the first LU block module 320 may identify a capacity exceeding the maximum virtual capacity of the second LU 380 from the allocable request capacity and the capacity obtained by adding the pre-allocated capacity to the second LU 380.

In an embodiment, the first LU block module 320 may generate a capacity allocation command for setting the capacity that exceeds the maximum virtual capacity as a capacity for overprovisioning of the second LU 380. In an embodiment, the first LU block module 320 may generate a capacity allocation command for allocating a capacity that does not exceed the maximum virtual capacity to the second LU 380. In an embodiment, the first LU block module 320 may set the capacity that exceeds the maximum virtual capacity as the capacity for overprovisioning of the second LU 380, and generate the capacity allocation command for allocating the capacity not exceeding the maximum virtual capacity to the second LU 380.

In an embodiment, in operation 925, the first LU block module 320 may deliver the capacity allocation command to the storage device driver 210.

In an embodiment, the storage device driver 210 may generate a UFS command for capacity allocation of the second LU 380. Hereinafter, the UFS command for capacity allocation of the LU may be referred to as an allocation UFS command.

In an embodiment, the storage device driver 210 may generate the allocation UFS command based on parameters included in the capacity allocation command of the second LU 380. In an embodiment, the storage device driver 210 may generate the allocation UFS command including parameters included in the capacity allocation command of the second LU 380.

In an embodiment, in operation 931, the storage device driver 210 may deliver the allocation UFS command of the second LU 380 to a resource distributor 360.

Referring to FIG. 9B, the resource distributor 360 may release (or subtract), from the first LU 370, an allocation of a memory area 993 corresponding to an allocation request capacity among entire memory areas 591 and 593 of a memory unit 390. In an embodiment, the resource distributor 360 may release (or subtract), from the first LU 370, an allocation of the memory area 993 corresponding to a virtual memory area 973 among entire virtual memory areas 571 and 573 of the first LU 370. The resource distributor 360 may allocate a partial capacity of the memory area 993 corresponding to the allocation request capacity among the entire memory areas 591 and 593 of the memory unit 390 to the second LU 380. The resource distributor 360 may set a capacity that exceeds entire virtual memory areas 581 and 583 of the second LU 380 among the memory area 993 of the memory unit 390 as a memory area 981 for overprovisioning of the second LU 380.

For example, the resource distributor 360 may allocate a memory area 993 corresponding to the allocation request capacity from the memory unit 390 allocated to the first LU 370 to the second LU 380 and/or set the memory area 993 as an overprovisioning area of the second LU 380.

In FIG. 9B, as a result of an allocation, a memory area 991 of the memory unit 390 may be allocated to a virtual memory area 971 of the first LU 370, and the memory area 593 may be allocated to the virtual memory area 581 of the second LU 380. A partial capacity of the memory area 993 of the memory unit 390 may be allocated to the virtual memory area 583 of the second LU 380, and the remaining capacity of the memory area 993 may be set as the memory area 981 for overprovisioning of the second LU 380, thus allowing a memory allocation for the second LU 380 to exceed its maximum virtual capacity.

In FIG. 9B, the virtual memory area 973 may be a capacity of 9 GB of the first LU 370 which is TLC, the virtual memory area 583 may be a capacity of 2 GB of the second LU 380 which is SLC, and the memory area 981 for overprovisioning may be a capacity of 1 GB of the second LU 380 which is the SLC. The memory area 593 of the memory unit 390 that operates as the TLC may operate as SLC by being allocated to the second LU 380.

Referring again to FIG. 9A, in operation 935, the resource distributor 360 may transmit a response for the allocation UFS command to the storage device driver 210. The resource distributor 360 may transmit an allocation result of the second LU 380 to the storage device driver 210.

In an embodiment, in operation 940, the storage device driver 210 may transmit a response including the allocation result to the first LU block module 320. The storage device driver 210 may transmit the capacity allocation result of the second LU 380 to the first LU block module 320.

In an embodiment, the first LU block module 320 may update a first LU descriptor 321. In an embodiment, the first LU block module 320 may update the first LU descriptor 321 based on the capacity allocation result. For example, the first LU block module 320 may update the first LU descriptor 321 as illustrated in Table 13 below.

**[Table 13]**

| PARAMETER NAME | PARAMETER VALUE |
|---|---|
| VLU_type | PLU |
| VLU_ID | plu0 |
| memory_type | TLC |
| SLU | slu0 |
| SLU_reserve | 12GB |

For example, as 3 GB (or 9 GB based on TLC) is additionally allocated to the second LU 380 dependent on the first LU 370, the value of the parameter SLU_reserve of the first LU descriptor 321 may be updated to 4 GB.

In an embodiment, in operation 950, the first LU block module 320 may request the second LU block module 330 to update a second LU descriptor 331. The storage device driver 210 may transmit a request including the capacity allocation result of the second LU 380 to the first LU block module 320.

In an embodiment, the second LU block module 330 may update the second LU descriptor 331. In an embodiment, the second LU block module 330 may update the second LU descriptor 331 based on the capacity allocation result. For example, the second LU block module 330 may update the second LU descriptor 331 as illustrated in Table 14 below.

**[Table 14]**

| PARAMETER NAME | PARAMETER VALUE |
|---|---|
| VLU_type | SLU |
| VLU_ID | slu0 |
| memory_type | SLC |
| PLU | plu0 |
| Persistence | 1 |
| Granularity | 4MB |
| virtual_capacity | 3GB |
| allocated_capacity | 3GB |
| overprovisioning_capacity | 1GB |

For example, the currently allocated capacity of the second LU descriptor 331 may be updated from 1 to 3 GB (9 GB based on TLC), and an overprovisioning capacity may be allocated to 1 GB (3 GB based on TLC).

According to an embodiment, the first LU block module 320 may transmit a response for the capacity allocation command to the application 146. The first LU block module 320 may transmit a response including the capacity allocation result of the second LU 380 to the application 146.

Hereinafter, an operation in which the electronic device 101 changes a memory type of the second LU 380 will be described.

FIG. 10A illustrates an example of an operation of an electronic device 101 according to an embodiment. FIG. 10B illustrates an example of capacity allocation according to an embodiment. FIG. 10C illustrates an example of capacity allocation according to an embodiment.

FIGS. 10A, 10B, and 10C may be described with reference to FIGS. 1, 2, 3, 4, 5A, and 5B.

FIGS. 10A, 10B, and 10C may illustrate a situation after a capacity is allocated to a second LU 380 according to FIGS. 5A and 5B.

In an embodiment, an application 146 may generate a command (or request) related to a second LU block module 330. For example, the application 146 may generate a memory type change command of the second LU block module 330. For example, the application 146 may generate a memory type change command including parameters for changing a memory type of the second LU 380. In an embodiment, the application 146 may set parameters for changing the memory type of the second LU 380 as illustrated in Table 15 below.

**[Table 15]**

| PARAMETER NAME | PARAMETER VALUE |
|---|---|
| VLU_ID | slu0 |
| memory_type | TLC |

For example, the application 146 may set parameters for changing the memory type of the second LU 380 whose ID of VLU is slu0 (i.e., the second LU 380) and the memory type is TLC.

In an embodiment, the application 146 may deliver a memory type change command of the second LU 380 to a first LU block module 320. For example, in operation 1011, the application 146 may deliver the memory type change command of the second LU 380 to a file system 310, and in operation 1013, the file system 310 may deliver the memory type change command of the second LU 380 to the first LU block module 320. However, it is not limited thereto. For example, the application 146 may directly deliver the memory type change command of the second LU 380 to the first LU block module 320.

In an embodiment, in operation 1021, the first LU block module 320 may obtain information on a capacity allocation unit (e.g., 4 MB) of the second LU 380 from the second LU block module 330. For example, in case that the memory type of the second LU 380 is changed so that a memory cell stores more bits, the first LU block module 320 may obtain information on the capacity allocation unit (e.g., 4 MB) of the second LU 380 from the second LU block module 330. For example, in case that the memory type of the second LU 380 is changed so that the memory cell stores fewer bits, the first LU block module 320 may not obtain information on the capacity allocation unit (e.g., 4 MB).

In an embodiment, the first LU block module 320 may determine whether a memory type change for the second LU 380 is possible, based on an available capacity (or a capacity of an area in which data is not stored) in the first LU 370. For example, in case that the memory type of the second LU 380 is changed so that the memory cell stores more bits, the first LU block module 320 may determine whether the memory type change for the second LU 380 is possible.

In an embodiment, in case that the available capacity in the first LU 370 is greater than or equal to a required capacity according to the memory type change, the first LU block module 320 may determine that the memory type change for the second LU 380 is possible. Herein, the required capacity may correspond to a value obtained by multiplying pre-allocated capacity by the number of bits to be reduced per memory cell. For example, 3 GB is allocated, and in order to change the memory type of the second LU 380 that operates as TLC to SLC, an additional capacity of 3 GB * 2 (three bits minus one bit) needs to be allocated to the second LU 380. Consequently, when a memory type change is to a lower order type (e.g. TLC to SLC) it will be necessary to determine that there is sufficient available capacity in the first LU 370 to provide the required increase in capacity required to store the same amount of data in SLC compared to TLC.

In an embodiment, in operation 1025, the first LU block module 320 may deliver the memory type change command to the storage device driver 210. In an embodiment, when it is determined that the memory type change is possible, the first LU block module 320 may deliver the memory type change command to the storage device driver 210.

In an embodiment, the storage device driver 210 may generate a UFS command for changing the memory type of the second LU 380. Hereinafter, the UFS command for changing the memory type of the LU may be referred to as a change UFS command.

In an embodiment, the storage device driver 210 may generate the change UFS command based on parameters included in the memory type change command of the second LU 380. In an embodiment, the storage device driver 210 may generate the change UFS command including parameters included in the memory type change command of the second LU 380.

In an embodiment, in operation 1031, the storage device driver 210 may deliver the change UFS command of the second LU 380 to a resource distributor 360.

Referring to FIG. 10B, the resource distributor 360 may release (or subtract), from the first LU 370, an allocation of a memory area 1093 corresponding to the required capacity for changing the memory type among entire memory areas 591 and 593 of a memory unit 390.

In an embodiment, in operation 1033, the resource distributor 360 may request a migration of data from a LU management unit 350. For example, the resource distributor 360 may request the LU management unit 350 to migrate data stored in the area 593 of the second LU 380 to the area 1093.

In an embodiment, the resource distributor 360 may complete resource distribution between the first LU 370 and the second LU 380 in response to the migration in the LU management unit 350 being completed. For example, the resource distributor 360 may release (or subtract), from the second LU 380, the allocation of the memory area 593 of the memory unit 390 corresponding to a virtual memory area 581 among entire virtual memory areas 581 and 583 of the second LU 380. For example, the resource distributor 360 may allocate the memory area 593 to a virtual memory area 573 of the first LU 370 since only memory area 1093 is required to provide the storage capacity of the second LU 380.

In FIG. 10B, a virtual memory area 1073 may be a capacity of 1 GB of the first LU 370 that is TLC, and the virtual memory area 581 of the second LU 380 of which the memory type has changed may be a capacity of 1 GB. The memory area 593 of the memory unit 390 that operates as SLC may operate as TLC by being allocated again to the first LU 370.

Referring to FIG. 10C, as a result of the memory type change, memory areas 1091 and 593 of the memory unit 390 may be allocated to virtual memory areas 1071 and 573 of the first LU 370, and the memory area 1093 may be allocated to the virtual memory area 581 of the second LU 380. The memory area 1093 of the memory unit 390 corresponding to the virtual memory area 1073 of the first LU 370 may be allocated to the virtual memory area 581 of the second LU 380.

Referring again to FIG. 10A, in operation 1035, the resource distributor 360 may transmit a response for the change UFS command to the storage device driver 210. The resource distributor 360 may transmit an allocation result of the second LU 380 to the storage device driver 210.

In an embodiment, in operation 1040, the storage device driver 210 may transmit a response including the allocation result to the first LU block module 320. The storage device driver 210 may transmit a memory type change result of the second LU 380 to the first LU block module 320.

In an embodiment, the first LU block module 320 may update a first LU descriptor 321. In an embodiment, the first LU block module 320 may update the first LU descriptor 321 based on the memory type change result. For example, the first LU block module 320 may update the first LU descriptor 321 as illustrated in Table 16 below.

**[Table 16]**

| PARAMETER NAME | PARAMETER VALUE |
|---|---|
| VLU_type | PLU |
| VLU_ID | plu0 |
| memory_type | TLC |
| SLU | slu0 |
| SLU_reserve | 1GB |

For example, as 1 GB is allocated to the second LU 380 dependent on the first LU 370, a value of the parameter SLU_reserve of the first LU descriptor 321 may be updated from 3 GB to 1 GB.

In an embodiment, in operation 1050, the first LU block module 320 may request the second LU block module 330 to update a second LU descriptor 331. The storage device driver 210 may transmit a request including the memory type change result of the second LU 380 to the first LU block module 320.

In an embodiment, the second LU block module 330 may update the second LU descriptor 331. In an embodiment, the second LU block module 330 may update the second LU descriptor 331 based on the memory type change result. For example, the second LU block module 330 may update the second LU descriptor 331 as illustrated in Table 17 below.

**[Table 17]**

| PARAMETER NAME | PARAMETER VALUE |
|---|---|
| VLU_type | SLU |
| VLU_ID | slu0 |
| memory_type | TLC |
| PLU | plu0 |
| persistence | 1 |
| granularity | 4MB |
| virtual_capacity | 3GB |
| allocated_capacity | 1GB |

For example, the second LU descriptor 331 may change the memory type from SLC to TLC. According to the second LU descriptor 331, the currently allocated capacity may be the same as 1 GB.

According to an embodiment, the first LU block module 320 may transmit a response for the memory type change command to the application 146. The first LU block module 320 may transmit a response including the memory type change result of the second LU 380 to the application 146.

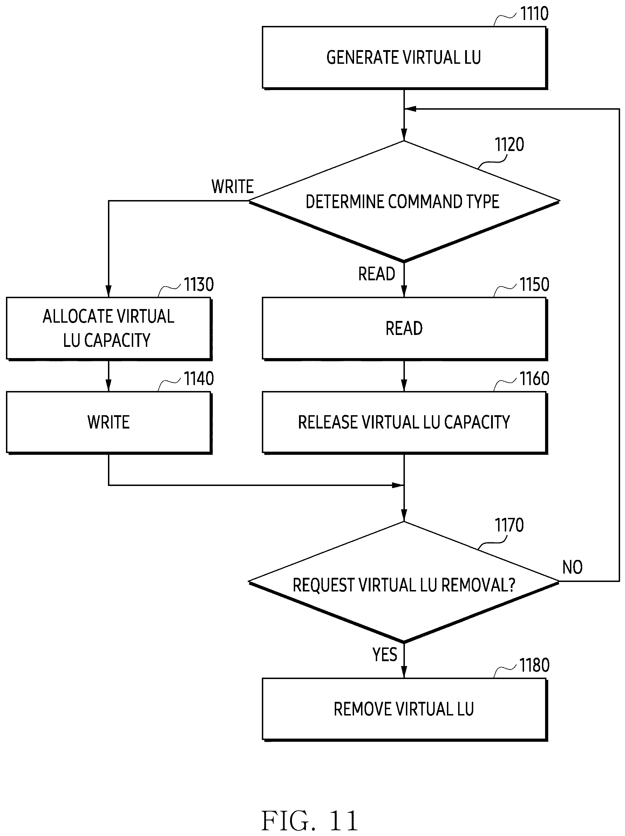

FIG. 11 is a flowchart illustrating an operation of an electronic device 101 according to an embodiment.

FIG. 11 may be described with reference to FIGS. 1, 2, 3, 4, 5A, 6A, and 7. FIG. 11 may indicate a life cycle of a second LU 380.

Referring to FIG. 11, in operation 1110, the electronic device 101 may generate a virtual LU (VLU). For example, the electronic device 101 may generate the second LU 380 as one of the virtual LUs. For example, the electronic device 101 may generate the virtual LU (e.g., the second LU 380) based on the electronic device 101 booting. For example, the electronic device 101 may generate the virtual LU (e.g., the second LU 380) during runtime (or while an application 146 is being executed). For example, the electronic device 101 may generate the virtual LU (e.g., the second LU 380) through at least some of operations (e.g., the operations 420, 430, and 440) illustrated in FIG. 4.

According to an embodiment, the electronic device 101 may format a memory area 591 of a memory unit 390 allocated to the virtual LU (e.g., the second LU 380).

In operation 1120, the electronic device 101 may determine a command type. For example, the electronic device 101 may determine a type of a command generated from the application 146. For example, the electronic device 101 may determine a type of a swap command generated from the application 146. For example, a swap may refer to an operation of storing (or swapping out) data stored in a volatile memory 132 of a memory 130 to a storage device 205 or storing (or swapping in) data stored in the storage device 205 to the volatile memory 132. Memory where swap data is stored may be referred to as a swap file or page file. According to an embodiment, a program that directly accesses a block module without a file system 310 and/or a swap technique that virtually generates an additional memory space to an operation of the program may be utilized. According to an embodiment, the swap technique that virtually generates an additional memory space may be also utilized in the file system 310 capable of dynamically managing resources of an LU (e.g., the first LU 370) in a host device 201. According to an embodiment, a swap may be performed to use the first LU 370 or second LU 380 as a swap device. For example, the swap may be a memory management technique that stores data stored in the volatile memory in a separate swap device when volatile memory is insufficient. According to an embodiment, the host device 201 may format the LU (e.g., the first LU 370) designated as the swap device when booting and then turn it on to perform swap-out (or write) and/or swap-in (or read). Thereafter, the host device 201 may deactivate the swap upon termination. A LU may also be designated as a swap device during operations other than booting if there is insufficient volatile memory.

In operation 1120, in case that the command is a write command, the electronic device 101 may perform operation 1130. In operation 1120, in case that the command is a swap-out command, the electronic device 101 may perform operation 1130. In operation 1120, in case that the command is a read command, the electronic device 101 may perform operation 1150. In operation 1120, in case that the command is a swap-in command, the electronic device 101 may perform operation 1150.

In operation 1130, the electronic device 101 may allocate a resource to the virtual LU. For example, the electronic device 101 may allocate a resource according to a memory area 593 of the memory unit 390 to the virtual LU (e.g., the second LU 380). For example, the electronic device 101 may allocate the resource according to the memory area 593 to the virtual LU (e.g., the second LU 380) through at least some of operations (e.g., the operations 525 and 531) illustrated in FIG. 5A.

In operation 1140, the electronic device 101 may perform writing. For example, the electronic device 101 may write data to the virtual LU (e.g., the second LU 380). For example, the electronic device 101 may write data to the virtual LU (e.g., the second LU 380) through at least some of operations (e.g., the operations 720 and 730) illustrated in FIG. 7.

In operation 1150, the electronic device 101 may perform reading. For example, the electronic device 101 may read data stored in the virtual LU (e.g., the second LU 380). For example, the electronic device 101 may read data stored in the virtual LU (e.g., the second LU 380) through at least some of the operations (e.g., the operations 720 and 730) illustrated in FIG. 7.

In operation 1160, the electronic device 101 may release the resource allocated to the virtual LU. For example, the electronic device 101 may release the resource according to the memory area 593 of the memory unit 390 allocated to the virtual LU (e.g., the second LU 380). For example, the electronic device 101 may release the resource according to the memory area 593 allocated to the virtual LU (e.g., the second LU 380) through at least some of operations (e.g., the operations 625 and 631) illustrated in FIG. 6A.

According to an embodiment, the electronic device 101 may release a resource according to an idle area from the memory area 593 of the memory unit 390 allocated to the virtual LU (e.g., the second LU 380). Herein, the idle area may be an area in which data is not recorded.

In operation 1170, the electronic device 101 may determine a removal request for the virtual LU. For example, the electronic device 101 may determine whether the command generated from the application 146 is the removal request.

In operation 1170, in case that the request is the removal request, the electronic device 101 may perform operation 1180. In operation 1170, in case that the request is the removal request for the virtual LU (e.g., the second LU 380), the electronic device 101 may perform operation 1180. In operation 1170, in case that the request is not the removal request, the electronic device 101 may perform operation 1120. In operation 1180, in case that the request is not the removal request for the virtual LU (e.g., the second LU 380), the electronic device 101 may perform operation 1120.

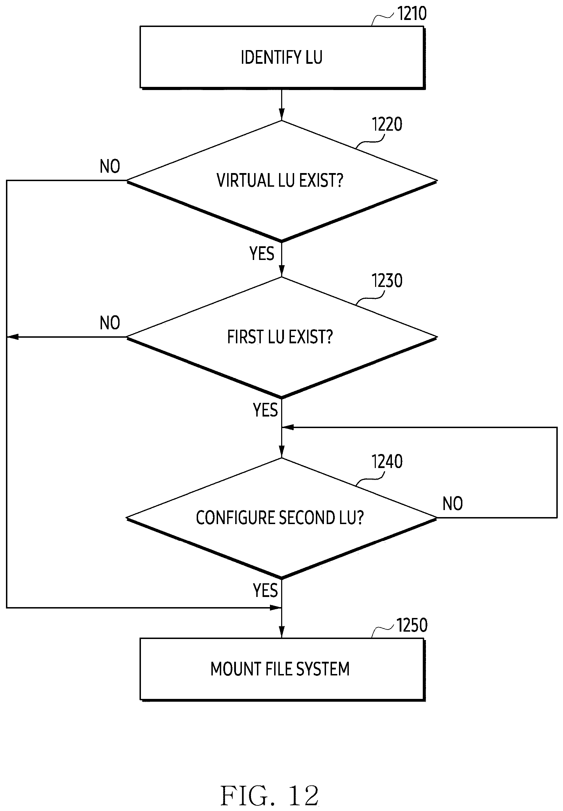

FIG. 12 is a flowchart illustrating an operation of an electronic device 101 according to an embodiment.

FIG. 12 may be described with reference to FIGS. 1, 2, 3, 4, 5A, 6A, and 7.

Referring to FIG. 12, in operation 1210, the electronic device 101 may identify an LU. For example, the electronic device 101 may identify the LU during booting. For example, the electronic device 101 may identify VLU. For example, the electronic device 101 may identify a first LU 370 and/or a second LU 380.

In operation 1220, the electronic device 101 may determine whether a virtual LU exists. For example, the electronic device 101 may determine whether the virtual LU is identified. In an embodiment, in case that the virtual LU is identified, the electronic device 101 may configure a block module for the virtual LU. For example, the electronic device 101 may configure a block module for the identified first LU 370 and/or the second LU 380.

In operation 1220, in case that the virtual LU is identified, the electronic device 101 may perform operation 1230. In operation 1220, in case that the virtual LU is not identified, the electronic device 101 may perform operation 1250.

In operation 1230, the electronic device 101 may determine whether the first LU 370 exists. For example, the electronic device 101 may determine whether the first LU 370 exists among the identified virtual LUs.

In operation 1230, in case that the first LU 370 exists, the electronic device 101 may perform operation 1240. In operation 1230, in case that the first LU 370 does not exist, the electronic device 101 may perform operation 1250.

In operation 1240, the electronic device 101 may determine whether the second LU 380 is configured. For example, the electronic device 101 may determine whether a second LU block module 330 with respect to the second LU 380 is generated.

In operation 1240, in case that the second LU 380 is configured, the electronic device 101 may perform operation 1250. In operation 1230, in case that the second LU 380 is not configured, the electronic device 101 may perform operation 1240 again.

In operation 1250, a processor 120 may mount a file system 310. The processor 120 may connect a block module (e.g., the first LU block module 320) to a specific location (or address) of a directory.

An electronic device 101 as described above may comprise a processor 120. The electronic device may comprise a memory 130 including a storage device 205 including memory area 591 and 593 able to support a plurality of logical partitions, and storing instructions. The instructions may be configured, when executed by the processor 120, to cause the electronic device 101 to identify whether a first memory area 591 and 593 satisfies a designated condition, in a state where a first logical partition 370 to which the first memory area 591 and 593 with a first capacity from the memory area 591 and 593 is allocated is set to the storage device 205, and data is stored in at least a part of the first memory area 591 and 593. The instructions may be configured, when executed by the processor 120, to cause the electronic device 101 to deliver, based on identifying that the designated condition is satisfied, to the storage device 205, a request for generating, in the storage device 205, a second logical partition 380 to which a second memory area 593 with a second capacity less than the first capacity from the first memory area 591 and 593 in addition to the first logical partition 370 is allocated, and which has an address space 581 corresponding to the second capacity.

The instructions may be configured, when executed by the processor 120, to cause the electronic device 101 to request the storage device 205 for allocating a memory area with a capacity exceeding the total address space 581 and 583 from the requested capacity, as a memory area for overprovisioning of a second logical partition 380, in response to identifying that requested capacity requested for allocating to the second location partition 380 is greater than total address space 581 and 583 of the second logical partition 380.

The instructions may be configured, when executed by the processor 120, to cause the electronic device 101 to identify whether the designated condition for a swap-out for data stored in volatile memory area from the memory 130 is satisfied. The instructions may be configured, when executed by the processor 120, to cause the electronic device 101 to generate the request for allocation of the second memory area 593, based on identifying that the designated condition for the swap-out is satisfied.

The instructions may be configured, when executed by the processor 120, to cause the electronic device 101 to deliver the request to the storage device 205, for the storage device 205 to allocate at least a part area of an area on which the data is not stored from the first memory area 591 and 593 to the second logical partition 380 as the second memory area 593.

The instructions may be configured, when executed by the processor 120, to cause the electronic device 101 to receive a response indicating a generation result of the second logical partition 380 from the storage device 205, and generate a block module 330 for accessing an address space 581 of the second logical partition 380 according to an allocation result of the second memory area 593.

A storage device 205 as described above may comprise an interfacing circuit 250 configured to be electrically connected to an electronic device 101, and transmit and receive data with the electronic device 101. The storage device 205 may comprise a non-volatile memory 290 comprising a memory unit 390. The storage device 205 may comprise a controller 270. The controller 270 may be configured to obtain, through the interfacing circuit 250, from the electronic device 101, a request for generating the second logical partition 380 to which at least a part of memory area 593 with a second capacity less than a first capacity is allocated in addition to a first logical partition 370 in a first memory area 591 and 593 of a memory unit 390 allocated to the first logical partition 370 among the at least one partition for the memory unit 390 with the first capacity from the memory area 591 and 593, and which has an address space 581 corresponding to the second capacity. The controller 270 may be configured to generate the second logical partition 380 with the address space 581 corresponding to the second capacity specified in a generation request, in response to the generation request. The controller 270 may be configured to transmit a response indicating a generation result of the second logical partition 380 to the electronic device 101 through the interfacing circuit 250.

A method as described above may be performed in an electronic device 101 including a storage device 205 including memory area 591 and 593 able to support a plurality of logical partitions. The method may comprise identifying whether a first memory area 591 and 593 satisfies a designated condition, in a state where a first logical partition 370 to which the first memory area 591 and 593 with a first capacity from the memory area 591 and 593 is allocated is set to the storage device 205, and data is stored in at least a part of the first memory area 591 and 593. The method may comprise delivering, based on identifying that the designated condition is satisfied, to the storage device 205, a request for generating, in the storage device 205, a second logical partition 380 to which a second memory area 593 with a second capacity less than the first capacity from the first memory area 591 and 593 in addition to the first logical partition 370 is allocated, and which has an address space 581 corresponding to the second capacity.

A non-transitory computer-readable storage medium as described above may store a program including instructions. The instructions may be configured, when executed by a processor 120 of an electronic device 101 including a storage device 205 including a memory area 591 and 593 able to support a plurality of logical partitions, to cause the electronic device 101 to identify whether a first memory area 591 and 593 satisfies a designated condition, in a state where a first logical partition 370 to which the first memory area 591 and 593 with a first capacity from the memory area 591 and 593 is allocated is set to the storage device 205, and data is stored in at least a part of the first memory area 591 and 593. The instructions may be configured, when executed by the processor 120, to cause the electronic device 101 to deliver, based on identifying that the designated condition is satisfied, to the storage device 205, a request for generating, in the storage device 205, a second logical partition 380 to which a second memory area 593 with a second capacity less than the first capacity from the first memory area 591 and 593 in addition to the first logical partition 370 is allocated, and which has an address space 581 corresponding to the second capacity.

A method as described above may be performed by a storage device 205 including an interfacing circuit 250 that is electrically connected to an electronic device 101, and transmit and receive data with the electronic device 101, and a non-volatile memory 290 comprising a memory unit 390. The method may be configured to obtain, from the electronic device 101, through the interfacing circuit 250, a request for generating a second logical partition 380 to which at least a part of a memory area 593 with a second capacity less than a first capacity is allocated in addition to a first logical partition 370 in a first memory area 591 and 593 of the memory unit 390 allocated to the first logical partition 370 among the at least one partition for the memory unit 390 with the first capacity from the memory area 591 and 593, and which has an address space 581 corresponding to the second capacity. The method may be configured to generate the second logical partition 380 with the address space 581 corresponding to the second capacity specified in a generation request, in response to the generation request. The method may be configured to transmit a response indicating a generation result of the second logical partition to the electronic device 101 through the interfacing circuit 250.

A non-transitory computer-readable storage medium as described above may store a program including instructions. The instructions may be configured, when executed by a processor of a storage device 205 that is electrically connected to an electronic device 101 and includes an interfacing circuit 250 for transmitting and receiving data with the electronic device 101, and a non-volatile memory 290 comprising a memory unit 390, to cause the storage device 205 to obtain, through the interfacing circuit 250, from the electronic device 101, a request for generating a second logical partition 380 to which at least a part of a memory area 593 with a second capacity less than a first capacity is allocated in addition to a first logical partition 370 in a first memory area 591 and 593 of the memory unit 390 allocated to the first logical partition 370 among the at least one partition for the memory unit 390 with the first capacity from the memory area 591 and 593, and which has an address space 581 corresponding to the second capacity. The instructions may be configured, when executed by the processor, to cause the storage device 205 to generate the second logical partition 380 with the address space 581 corresponding to the second capacity specified in a generation request, in response to the generation request. The instructions may be configured, when executed by the processor, to cause the storage device 205 to transmit a response indicating a generation result of the second logical partition 380 to the electronic device 101 through the interfacing circuit 250.

An electronic device 101 as described above may comprise a storage device 205 including at least one partition. The electronic device 101 may comprise a processor 120. The electronic device 101 may comprise a memory 130 storing instructions. The instructions may be configured, when executed by the processor 120, to cause the electronic device 101 to identify a generation request of a second partition 380 to which at least a part of memory area 593 is allocated in a first memory area 591 and 593 allocated in a first partition 370 from the at least one partition. The instructions may be configured, when executed by the processor 120, to cause the electronic device 101 to request the storage device 205 to generate the second partition 380 with an address space 581 and 583 corresponding to a first capacity specified in a generation request, in response to the generation request. The instructions may be configured, when executed by the processor 120, to cause the electronic device 101 to receive a response indicating a generation result of the second partition 380 from the storage device 205. The instructions may be configured, when executed by the processor 120, to cause the electronic device 101 to generate a block module 330 for accessing the address space of the second partition 380, based on the generation result.

The instructions may be configured, when executed by the processor 120, to cause the electronic device 101 to identify an allocation request of a second memory area 593 for the second partition 380. The instructions may be configured, when executed by the processor 120, to cause the electronic device 101 to identify, in response to the allocation request, whether allocation to the second partition 380 is possible, based on a requested capacity requested for allocating to the second partition 380 and an available capacity of the first partition 370. The instructions may be configured, when executed by the processor 120, to cause the electronic device 101 to request to the storage device 205 to allocate a memory area 593 corresponding to the requested capacity among first memory area 591 and 593 of the first partition 370 to the second memory area 593 of the second partition 380, in response to identifying that the allocation is possible. The instructions may be configured, when executed by the processor 120, to cause the electronic device 101 to receive a response indicating an allocation result for the second partition 380 from the storage device 205. The instructions may be configured, when executed by the processor 120, to cause the electronic device 101 to update the block module 330 to enable access to the second memory area 593 of a second memory capacity corresponding to the requested capacity through the address space 581 and 583 of the second partition 380, based on the allocation result.

The instructions may be configured, when executed by the processor 120, to cause the electronic device 101 to update another block module 320 of the first partition 370 for capacity in use from the first memory capacity is increased by a capacity corresponding to the requested capacity, based on the allocation result.

The instructions may be configured, when executed by the processor 120, to cause the electronic device 101 to identify a release request for at least a partial capacity of the second memory capacity allocated to the second partition 380. The instructions may be configured, when executed by the processor 120, to cause the electronic device 101 to request the storage device 205 to release a memory area 691 corresponding to the partial capacity requested to be released from the second memory area 593, in response to the release request. The instructions may be configured, when executed by the processor 120, to cause the electronic device 101 to receive a response indicating a release result for the second partition 380 from the storage device 205. The instructions may be configured, when executed by the processor 120, to cause the electronic device 101 to update the block module 330 to enable access to the second memory area 693 corresponding to the second memory capacity reduced by the at least partial capacity through the address space 581 and 583 of the second partition 380, based on the release result. The instructions may be configured, when executed by the processor 120, to cause the electronic device 101 to update the other block module 320 of the first partition 370 for capacity in use from the first memory capacity is decreased by a capacity corresponding to the at least partial capacity, based on the release result.

The instructions may be configured, when executed by the processor 120, to cause the electronic device 101 to identify a write request for the second partition 380. The instructions may be configured, when executed by the processor 120, to cause the electronic device 101 to deliver the write request to the storage device 205, in response to identifying the write request. The instructions may be configured, when executed by the processor120, to cause the electronic device 101 to obtain a result according to the write request from the storage device 205. The instructions may be configured, when executed by the processor 120, to cause the electronic device 101 to identify that the write request is related to an address 583 to which a memory area 593 is not allocated in the address space 581 and 583, based on the result. The instructions may be configured, when executed by the processor 120, to cause the electronic device 101 to return an error for the write request, based on that the write request relates to the address 583 to which the memory area 593 is not allocated in the address space 581 and 583.

The instructions may be configured, when executed by the processor 120, to cause the electronic device 101 to identify a write capacity for the write request, based on that the write request is related to the address 583 to which the memory area 593 is not allocated in the address space 581 and 583. The instructions may be configured, when executed by the processor 120, to cause the electronic device 101 to identify whether additional allocation of the second memory area 593 is possible, based on the write request and the available capacity of the first partition 370. The instructions may be configured, when executed by the processor 120, to cause the electronic device 101 to request to the storage device 205 to additionally allocate a memory area 893 corresponding to the write capacity from a first memory area 591 of the first partition 370 to the second memory area 593 and 893 of the second partition 380, in response to identifying that the allocation is possible. The instructions may be configured, when executed by the processor 120, to cause the electronic device 101 to receive a response indicating an additional allocation result for the second partition 380 from the storage device 205. The instructions may be configured, when executed by the processor 120, to cause the electronic device 101 deliver the write request to the storage device 205, based on the additional allocation result.

The instructions may be configured, when executed by the processor 120, to cause the electronic device 101 to identify another write request of the second partition 380. The instructions may be configured, when executed by the processor 120, to cause the electronic device 101 to return an error for the other write request without delivering the other write request to the storage device 205, based on that the other write request is related to the address 583 according to the write request in the address space 581 and 583.

The instructions may be configured, when executed by the processor 120, to cause the electronic device 101 to identify a change request regarding a memory type of the second partition 380. The memory type may be related to a cell level of the second memory area 583. The instructions may be configured, when executed by the processor 120, to cause the electronic device 101 to request the memory type change of the second partition 380 to the storage device 205, based on the change request. The instructions may be configured, when executed by the processor 120, to cause the electronic device 101 to receive a response indicating a result of the memory type change for the second partition from the storage device 205. The instructions may be configured, when executed by the processor 120, to cause the electronic device 101 to update the block module 330 to enable access to the second memory area 1093 of the second partition 380 where the memory type is changed through the address space 581 and 583 of the second partition 380, based on the change result. The instructions may be configured, when executed by the processor 120, to cause the electronic device 101 to update the other block module 320 of the first partition 370 so that the first memory capacity of the first partition 370 is changed by a capacity changed in the second memory capacity according to the change result, based on the change result.

The instructions may be configured, when executed by the processor 120, to cause the electronic device 101 to identify whether the memory type change is possible, based on the second memory capacity of the second partition 380 and the available capacity of the first partition 370, in response to that a cell level according to the change request is lower than a cell level of the second partition 380. The instructions may be configured, when executed by the processor 120, to cause the electronic device 101 to request the storage device 205 to change the memory type of the second partition 380, in response to identifying that the memory type change is possible.

The instructions may be configured, when executed by the processor 120, to cause the electronic device 101 to request the storage device 205 to allocate a memory area with a capacity exceeding the first capacity from the requested capacity, as a memory area for overprovisioning of the second partition 380, in response to identifying that the requested capacity is greater than the first capacity.

The instructions may be configured, when executed by the processor 120, to cause the electronic device 101 to identify a swap-out request for data stored in the memory. The instructions may be configured, when executed by the processor 120, to cause the electronic device 101 to generate an allocation request of the second memory area 591, in response to the swap-out request.

The instructions may be configured, when executed by the processor 120, to cause the electronic device 101 to generate the generation request of the second partition 380, in response to the electronic device 101 booting.

A method as described above may be performed in an electronic device 101 including a storage device 205 including at least one partition. The method may comprise identifying a generation request of a second partition 380 in which at least a part of memory area 593 is allocated in a first memory area 591 and 593 allocated to a first partition 370 from the at least one partition. The method may comprise requesting the second partition 380 with an address space 581 and 583 corresponding to a first capacity specified in the generation request to the storage device 205, in response to the generation request. The method may comprise receiving a response indicating a generation result of the second partition 380 from the storage device 205. The method may comprise generating a block module 330 for accessing the address space of the second partition 380, based on the generation result.

The method may comprise identifying an allocation request of a second memory area 581 for the second partition 380. The method may comprise identifying whether allocation for the second partition 380 is possible, based on a requested capacity requested for allocation to the second partition 380 and an available capacity of the first partition 370, in response to the allocation request. The method may comprise requesting to the storage device 205 to allocate a memory area 593 corresponding to the requested capacity among a first memory area 591 and 593 of the first partition 370 as the second memory area 593 of the second partition 380, in response to identifying that the allocation is possible. The method may comprise receiving a response indicating an allocation result for the second partition 380 from the storage device 205. The method may comprise updating the block module 330 to enable access to the second memory area 593 of a second memory capacity corresponding to the requested capacity through the address space 581 and 583 of the second partition 380, based on the allocation result. The method may comprise updating another block module 320 of the first partition 370 for capacity in use from the first memory capacity is increased by a capacity corresponding to the requested capacity, based on the allocation result.

The method may comprise identifying a release request for at least a partial capacity from the second memory capacity allocated in the second partition 380. The method may comprise requesting the storage device 205 to release a memory area 691 corresponding to the partial capacity requested for releasing of the second memory area 593, in response to the release request. The method may comprise receiving a response indicating a release result for the second partition 380 from the storage device 205. The method may comprise updating the block module 330 to enable access to the second memory area 693 corresponding to the second memory capacity reduced by the at least partial capacity through the address space 581 and 583 of the second partition 380, based on the release request. The method may comprise updating the other block module 320 of the first partition 370 so that capacity in use from the first memory capacity is reduced by a capacity corresponding to the at least partial capacity, based on the release result.

A non-transitory computer-readable storage medium as described above may store a program including instructions. The instructions may be configured, when executed by at least one processor 120 of an electronic device 101 including a storage device 205 including at least one partition, to cause the electronic device 101 to identify a generation request of a second partition 380 in which at least a part of memory area 593 is allocated in first memory area 591 and 593 allocated to first partition 370 from the at least one partition. The instructions may be configured, when executed by the processor 120, to cause the electronic device 101 to request the storage device 205 to generate the second partition 380 with an address space 581 and 583 corresponding to a first capacity specified in the generation request, in response to the generation request. The instructions may be configured, when executed by the processor 120, to cause the electronic device 101 to receive a response indicating a generation result of the second partition 380 from the storage device 205. The instructions may be configured, when executed by the processor 120, to cause the electronic device 101 to generate a block module 330 to access the address space of the second partition 380, based on the generation result.

A storage device 205 as described above may comprise an interfacing circuit 250 configured to be electrically connected to an electronic device 101, and transmit and receive data with the electronic device 101. The storage device 205 may comprise a non-volatile memory 290 including a memory unit 390. The storage device 205 may comprise a controller 270. The controller 270 may be configured to obtain, through the interfacing circuit 250, from the electronic device 101, a generation request of a second partition 380 to which at least a part of a memory area 593 is allocated in a first memory area 591 and 593 of the memory unit 390 allocated to a first partition 370 from the at least one partition for the memory unit 390. The controller 270 may be configured to generate the second partition with an address space 581 and 583 corresponding to a first capacity specified in the generation request, in response to the generation request. The controller 270 may be configured to transmit a response indicating a generation result of the second partition 380 to the electronic device 101 through the interfacing circuit 250.

The controller 270 may be configured to obtain an allocation request for allocating a memory area 593 corresponding to a requested capacity from the first memory area 591 and 593 of the first partition 370 to the second memory area 593 of the second partition 380 from the electronic device 101 through the interfacing circuit 250. The controller 270 may be configured to allocate the memory area 593 corresponding to the request capacity to the second memory area 593 of the second partition 380. The controller 270 may be configured to transmit a response indicating an allocation result of the second partition 380 to the electronic device 101 through the interfacing circuit 250.

The controller 270 may be configured to obtain a release request for at least a partial capacity from the second memory capacity allocated to the second partition 380 from the electronic device 101 through the interfacing circuit 250. The controller 270 may be configured to release a memory area 691 corresponding to the at least partial capacity requested for releasing of the second memory area 593, in response to the release request. The controller 270 may be configured to return the memory area 691 released from the second memory area 593 to the first partition 370, in response to the release request. The controller 270 may be configured to transmit a response indicating a release result of the second partition 380 to the electronic device 101 through the interfacing circuit 250.

The controller 270 may be configured to obtain a write request for the second partition 380 from the electronic device 101 through the interfacing circuit 250. The controller 270 may be configured to return a result indicating insufficient capacity to the electronic device 101 through the interfacing circuit 250, in response to identifying that the write request is related to an address 583 to which the memory area 593 is not allocated in the address space 581 and 583.

The controller 270 may be configured to obtain a read request for the second partition 380 from the electronic device 101 through the interfacing circuit 250. The controller 270 may be configured to return designated data to the electronic device 101 through the interfacing circuit 250, in response to identifying that the read request is related to the address 583 to which the memory area 593 is not allocated in the address space 581 and 583.

The controller 270 may be configured to obtain a change request regarding a memory type of the second partition 380 from the electronic device 101 through the interfacing circuit 250. The memory type may be related to a cell level of the second memory area 581. The controller 270 may be configured to allocate a memory area corresponding to a memory area of the second partition 380 as a new second memory area 1093 of the second partition 380 in the first memory area 591 and 593, based on the change request. The controller 270 may be configured to migrate data stored in the existing second memory area 593 to the new second memory area 1093. The controller 270 may be configured to return the existing second memory area 581 to the first partition 370. The controller 270 may be configured to transmit a response indicating a change result of the memory type for the second partition 380 to the electronic device 101 through the interfacing circuit 250.

A method as described above may be performed by a storage device 205 comprising an interfacing circuit 250 configured to be electrically connected to an electronic device 101, and transmit and receive data with the electronic device 101, and a non-volatile memory 290 comprising a memory unit 390. The method may comprise obtaining a generation request of a second partition 380 to which at least a part of a memory area 593 is allocated in a first memory area 591 and 593 of the memory unit 390 allocated in a first partition 370 from the at least one partition for the memory unit 390 from the electronic device 101 through the interfacing circuit 250. The method may comprise generating the second partition 380 with an address space 581 and 583 corresponding to a first capacity specified in the generation request, in response to the generation request. The method may comprise transmitting a response indicating a generation result of the second partition 380 to the electronic device 101 through the interfacing circuit 250.

As described above, a non-transitory computer-readable storage medium may store a program including instructions. The instructions may be configured, when executed by a controller 270 of a storage device 205 including a non-volatile memory 290 including a memory unit 390, and an interfacing circuit 250 configured to be electrically connected to an electronic device 101 and transmit and receive data with the electronic device 101, to cause the storage device 205 to obtain a generation request of a second partition 380 to which at least a part of a memory area 593 is allocated in a first memory area 591 and 593 of the memory unit 390 allocated in a first partition 370 from the at least one partition for the memory unit 390 from the electronic device 101 through the interfacing circuit 250. The instructions may be configured, when executed by the controller 270, to cause the storage device 205 to generate the second partition 380 with an address space 581 and 583 corresponding to a first capacity specified in the generation request, in response to the generation request. The instructions may be configured, when executed by the controller 270, to cause the storage device 205 to transmit a response indicating a generation result of the second partition 380 to the electronic device 101 through the interfacing circuit 250.

An electronic device 101 as described above may comprise a processor 120, and memory 130 including a storage device 205 including a memory area 591, 593 able to support a plurality of logical partitions. The memory area may include a first memory area having a first capacity and data may be stored in at least part of the first memory area, and the first memory area may be allocated to a first logical partition 370 of the storage device, and the memory has stored thereon instructions. The instructions when executed by the processor, may cause the electronic device to identify whether the electronic device satisfies a designated condition. The instructions when executed by the processor, may cause the electronic device to based on identifying that the electronic device satisfies the designated condition, deliver, to the storage device, a generation request for generating, in the storage device, a second logical partition 380 to which a second memory area of the memory with a second capacity less than the first capacity is allocated, and which has an address space 581 corresponding to the second capacity. The instructions when executed by the processor, may cause the electronic device to generate, by the storage device, the second logical partition based on the generation request.

The instructions when executed by the processor, may cause the electronic device to identify a release request for at least a partial capacity of the second capacity allocated to the second logical partition, The instructions when executed by the processor, may cause the electronic device to in response to the release request, request the storage device to release a memory area 691 corresponding to the at least partial capacity requested to be released from the second memory area. The instructions when executed by the processor, may cause the electronic device to release, by the storage device, the memory area 691 corresponding to the at least partial capacity requested to be released from the second memory area.

The instructions when executed by the processor, may cause the electronic device to in response to release of the at least partial capacity allocated to the second logical partition: update a block module 330 for accessing, through a total address space 581, 583 of the second logical partition, the second memory area 693 based on the second capacity reduced by the at least partial capacity.

The instructions when executed by the processor, may cause the electronic device to identify a write request for the second logical partition. The instructions when executed by the processor, may cause the electronic device to in response to identifying the write request, transmit the write request to the storage device. The instructions when executed by the processor, may cause the electronic device to obtain a result according to the write request from the storage device. The instructions when executed by the processor, may cause the electronic device to based on the result, identify whether the write request relates to an address to which a memory area is not allocated in a total address space of the second partition. The instructions when executed by the processor, may cause the electronic device to based on that the write request relating to an address to which the memory area is not allocated in the total address space of the second partition, return an error for the write request.

The instructions when executed by the processor, may cause the electronic device to identify a write capacity for a write request based on that the write request relating to an address to which the memory area is not allocated in the total address space of the second partition. The instructions when executed by the processor, may cause the electronic device to based on the write capacity and available capacity of the first logical partition, identify whether additional allocation from the first memory area to the second memory area is possible. The instructions when executed by the processor, may cause the electronic device to in response to the additional allocation to the second memory area being possible, request the storage device to additionally allocate a memory area corresponding to the write capacity from the first memory area to the second memory area. The instructions when executed by the processor, may cause the electronic device to allocate, by the storage device, an additional memory area corresponding to the write capacity from the first memory area to the second memory area.

The instructions when executed by the processor, may cause the electronic device to identify another write request for the second logical partition. The instructions when executed by the processor, may cause the electronic device to based on the another write request relating to the address of the write request in the total address space, return an error for the another write request without transmitting the another write request to the storage device.

The instructions when executed by the processor, may cause the electronic device to identify a change request regarding a memory type of the second logical partition, the memory type being related to a cell level of the second memory area. The instructions when executed by the processor, may cause the electronic device to based on the change request, request the storage device to change the memory type of the second logical partition. The instructions when executed by the processor, may cause the electronic device to receive a response indicating a change result of the memory type for the second logical partition from the storage device. The instructions when executed by the processor, may cause the electronic device to based on the change result, update a block module for accessing, through a total address space of the second logical partition, the second memory area of the second logical partition in which the memory type is changed. The instructions when executed by the processor, may cause the electronic device to based on the change result, update a block module for accessing the first logical partition based on a change in capacity of the second logical partition.

The instructions when executed by the processor, may cause the electronic device to in response to a cell level according to the change request being lower than a cell level of the second logical partition, based on the second memory capacity of the second logical partition and the available capacity of the first logical partition, identify whether the memory type is changeable. The instructions when executed by the processor, may cause the electronic device to in response to identifying that the memory type is changeable, request the storage device to change the memory type of the second logical partition.

The instructions when executed by the processor, may cause the electronic device to in response to identifying that a capacity requested for allocating to second logical partition is greater than total address space of the second logical partition, request the storage device to allocate a memory area including a capacity exceeding the total address space from the requested capacity, as a memory area for overprovisioning of the second logical partition.

The instructions when executed by the processor, may cause the electronic device to identify whether a designated condition for a swap-out for data stored in volatile memory from the memory is satisfied. The instructions when executed by the processor, may cause the electronic device to based on identifying that the designated condition for the swap- out is satisfied, designate the first logical partition and/or the second logical partition as a swap device in which data from the volatile memory is stored.

The instructions when executed by the processor, may cause the electronic device to in response to booting of the electronic device, request the storage device to generate the second logical partition.

The instructions when executed by the processor, may cause the electronic device to allocate at least a part area of an area on which data is not stored from the first memory area to the second memory area allocated to the second logical partition.

The instructions when executed by the processor, may cause the electronic device to receive a response indicating an allocation result for the second memory area from the storage device. The instructions when executed by the processor, may cause the electronic device to based on the allocation result of the second memory area, generate a block module for accessing address space of the second logical partition.

A storage device 205 as described above may comprise an interfacing circuit 250 configured to be electrically connected to an electronic device 101, and transmit and receive data with the electronic device, a non-volatile memory 290 comprising a memory unit 390, the memory unit including a first memory area 591, 593 having a first capacity and data is stored in at least part of the first memory area, and the first memory area is allocated to a first logical partition 370 of the storage device, and a controller 270. The controller is configured to: through the interfacing circuit, obtain, from the electronic device, a request for generating, in the storage device, a second logical partition 380 to which a second memory area 593 with a second capacity less than the first capacity is allocated and which has an address space 581 corresponding to the second capacity. The controller is configured to: in response to the request, generate the second logical partition including an address space corresponding to second capacity specified in the request. The controller is configured to: through the interfacing circuit, transmit a response indicating a result of the request.

The controller is configured to: obtain a release request for at least a partial capacity of the second capacity allocated to the second logical partition, from the electronic device through the interfacing circuit. The controller is configured to: in response to the release request: release a memory area corresponding to the partial capacity requested to be released from the second memory area, return the memory area released from the second memory area to the first partition, and transmit a response indicating a release result of the second partition to the electronic device through the interfacing circuit.

The controller is configured to: obtain a write request for the second partition from the electronic device through the interfacing circuit, and in response to identifying that the write request is related to an address to which memory area is not allocated in total address space of the second logical partition, return, to the electronic device through the interfacing circuit, a result indicating insufficient capacity.

The controller is configured to: obtain a read request for the second partition from the electronic device through the interfacing circuit, and in response to identifying that the read request is related to an address to which memory area is not allocated in total address space of the second logical partition, return, to the electronic device through the interfacing circuit, an error for the read request.

The controller is configured to: obtain a change request regarding memory type of the second logical partition from the electronic device through the interfacing circuit, the memory type being related to a cell level of the second memory area; based on the change request, allocate a memory area corresponding to memory capacity of the second logical partition in the first memory area as a new second memory area of the second logical partition; migrate data stored in the existing second memory area to the new second memory area; return the existing second memory area to the first logical partition; and transmit a response indicating a change result of the memory type for the second logical partition to the electronic device through the interfacing circuit.

The designated condition may include one or more of: a predefined user condition occurring, a predefined operation being performed, an application requiring additional storage capacity, the first logical partition satisfying a predetermined capacity threshold, and the first memory area satisfying a designated condition.

A method as described above may be performed by an electronic device 101 including a storage device 205 including memory area 591, 593 able to support a plurality of logical partitions, wherein the memory area includes a first memory area 591 having a first capacity and data is stored in at least part of the first memory area, and the first memory area is allocated to a first logical partition 370 of the storage device. The method may comprise: identifying whether the electronic device satisfies a designated condition. The method may comprise: based on identifying that the electronic device 101 satisfies the designated condition, delivering, to the storage device 205, a generation request for generating, in the storage device 205, a second logical partition 380 to which a second memory area 593 of the memory 130 with a second capacity less than the first capacity is allocated, and which has an address space 581 corresponding to the second capacity. The method may comprise: generating by the storage device, the second logical partition 380 based on the generation request.

The method may comprise: identifying a release request for at least a partial capacity of the second capacity allocated to the second logical partition. The method may comprise: in response to the release request, requesting the storage device to release a memory area corresponding to the partial capacity requested to be released from the second memory area. The method may comprise: releasing, by the storage device, the memory area corresponding to the at least partial capacity requested to be released from the second memory area.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

All combinations of feature and embodiments of the present disclosure should be taken to fall within the scope of the present disclosure unless such features/embodiment/combinations are incompatible or clearly indicated as not falling within the scope of the present disclosure.

Further examples of the present disclosure are set out in the following numbered paragraphs.
1. An electronic device comprising a processor, and a memory including a storage device comprising a memory area configured to support a plurality of logical partitions, wherein the memory area includes a first memory area having a first capacity and data is stored in at least part of the first memory area, and the first memory area is allocated to a first logical partition of the storage device, and wherein the memory has stored thereon instructions which when executed by the processor cause the electronic device to:
   generate a second logical partition in the storage device; and
   release, from the first logical partition, a second memory area corresponding to a second capacity of the second logical partition and allocate the second memory area to the second logical partition,
   wherein the second logical partition has an address space corresponding to the second capacity and the second memory area is at least a part of an available area of the first memory.
2. The electronic device of paragraph 1, wherein the first logical partition has a higher order memory cell type (e.g. SLC, MLC, TCL etc.) than the second logical partition.
3. The electronic device of paragraphs 1 or 2, wherein the available memory of the first logical partition is reduced by the capacity represented by the second memory area when operating at a memory cell type of the first logical partition
4. The electronic device of any preceding paragraph, wherein the generating of the second logical partition and/or the releasing of the second memory area from the first logical partition is performed during or after booting of the electronic device.
5. The electronic device any preceding paragraph, wherein the instructions when executed by the processor cause the electronic device to:
   in response to a release request corresponding to the second logical partition, release a memory area corresponding to at least a partial capacity of the second memory area; and
   reallocate the released memory area to the first logical partition.
6. The electronic device of any preceding paragraph, wherein the instructions when executed by the processor cause the electronic device to:
   in response to a change request regarding a memory cell type of the second logical partition, identify if the change is to a lower order memory cell type or a higher order memory cell type, and if the change is to a lower order memory cell type, determine if the memory cell type is changeable based on an available capacity of the first logical partition.
7. The electronic device of paragraph 6, wherein the instructions when executed by the processor cause the electronic device to:
   if the memory type is changeable, release from the first logical partition a further memory area corresponding to an increased capacity required for the memory cell type change and allocate the further memory area to the second logical partition.
8. The electronic device of paragraph 6, wherein the instructions when executed by the processor cause the electronic device to:
   if the change is to a higher order memory cell type, release at least a part of the second memory area and allocate the at least a part of the second memory area to the first logical partition.
9. The electronic device of any preceding paragraph, wherein the instructions when executed by the processor cause the electronic device to:
   utilise the first and/or second logical partition as a swap file in which data from a volatile memory of the electronic device is stored.
10. The electronic device of any preceding paragraph, wherein the second logical partition has a maximum capacity, and wherein the instructions when executed by the processor cause the electronic device to:
   in response to a request for allocation to the second logical partition of a capacity greater than the maximum capacity, designate the capacity greater than the maximum capacity as overprovisioning capacity and allocate a further memory area corresponding to the overprovisioning capacity to the second logical partition.
11. The electronic device of any preceding paragraph, wherein the instructions when executed by the processor cause the electronic device to:
   identify a write capacity of a write request based on that the write request relating to an address that is not in the total address space of the second partition;
   based on the write capacity and available capacity of the first logical partition, identify whether an additional memory area from the first logical partition can be allocated to the second logical partition; and
   in response to the additional allocation being possible, additionally allocate a memory area corresponding to the write capacity from the first logical partition to the second logical partition.
12. The electronic device of any preceding paragraph, wherein the instructions when executed by the processor cause the electronic device to:
   display to a user of the electronic device a capacity and an available capacity of the first logical partition, and wherein the displayed capacity of the first logical partition is unchanged following release and allocation of the second memory area to the second logical partition and the available capacity is reduced by a capacity of the first logical partition corresponding to the second memory area.
13. The electronic device of any preceding paragraph, wherein the instructions when executed by the processor cause the electronic device to:
   maintain data stored in the first logical partition during the release of the second memory area from the first logical partition.
14 The electronic device of any preceding paragraph, wherein the generation of the second logical partition and/or the release of the second memory area from the first logical partition is performed in response to a designated condition being fulfilled at the electronic device, wherein the designated condition includes one or more of: a predefined user condition occurring, a predefined operation being performed, an application requiring additional storage capacity, the first logical partition satisfying a predetermined capacity threshold, and the first memory area satisfying a designated condition.
15. A method executed by the electronic device including a storage device including a memory area configured to support a plurality of logical partitions, wherein the memory area includes a first memory area having a first capacity and data is stored in at least part of the first memory area, and the first memory area is allocated to a first logical partition of the storage device, and wherein method comprises:
   generating a second logical partition in the storage device; and
   releasing, from the first logical partition, a second memory area corresponding to a second capacity of the second logical partition and allocating the second memory area to the second logical partition,
   wherein the second logical partition has an address space corresponding to the second capacity and the second memory area is at least a part of an available area of the first memory.

## Claims

1. An electronic device (101), comprising:
a processor (120), and
memory (130) including a storage device (205) including a memory area (591, 593) able to support a plurality of logical partitions, wherein the memory area (591, 593) includes a first memory area (591) having a first capacity and data is stored in at least part of the first memory area (591, 593), and the first memory area (591, 593) is allocated to a first logical partition (370) of the storage device, and wherein the memory has stored thereon instructions that when executed by the processor (120) cause the electronic device (101) to:
identify whether the electronic device (101) satisfies a designated condition; and
based on identifying that the electronic device (101) satisfies the designated condition, deliver, to the storage device (205), a generation request for generating, in the storage device, a second logical partition (380) to which a second memory area (593) of the memory (130) with a second capacity less than the first capacity of the first memory area (591, 593) is allocated, and which has an address space (581) corresponding to the second capacity, and
generate, by the storage device (205), the second logical partition based on the generation request.

2. The electronic device of claim 1, wherein the instructions when executed by the processor (120) cause the electronic device (101) to:
identify a release request for at least a partial capacity of the second capacity allocated to the second logical partition (380);
in response to the release request, request the storage device (205) to release a memory area (691) corresponding to the at least partial capacity requested to be released from the second memory area (593); and
release, by the storage device (205), the memory area (691) corresponding to the at least partial capacity requested to be released from the second memory area (593).

3. The electronic device of claim 2, wherein the instructions when executed by the processor (120) cause the electronic device (101) to:
in response to release of the at least partial capacity allocated to the second logical partition (380):
update a block module (330) for accessing, through a total address space (581, 583) of the second logical partition (380), the second memory area (693) based on the second capacity reduced by the at least partial capacity.

4. The electronic device of any one of claims 1 to 3, wherein the instructions when executed by the processor (120) cause the electronic device (101) to:
identify a write request for the second logical partition (380);
in response to identifying the write request, transmit the write request to the storage device (205);
obtain a result according to the write request from the storage device (205);
based on the result, identify whether the write request relates to an address (583) to which a memory area is not allocated in a total address space (581, 583); and
based on that the write request relating to an address (583) to which the memory area is not allocated in the total address space (581, 583) of the second partition, return an error for the write request.

5. The electronic device of any one of claims 1 to 4, wherein the instructions when executed by the processor (120) cause the electronic device (101) to:
identify a write capacity for a write request based on that the write request relating to an address (583) to which the memory area (593) is not allocated in the total address space (581, 583) of the second partition;
based on the write capacity and available capacity of the first logical partition (370), identify whether additional allocation from the first memory area (591, 593) to the second memory area (593) is possible;
in response to the additional allocation to the second memory area (593) being possible, request the storage device (205) to additionally allocate a memory area (893) corresponding to the write capacity from the first memory area (591) to the second memory area (593, 893); and
allocate, by the storage device (205), an additional memory area (893) corresponding to the write capacity from the first memory area to the second memory area (593, 893).

6. The electronic device of claims 4 or 5, wherein the instructions when executed by the processor (120) cause the electronic device (101) to:
identify another write request for the second logical partition (380); and
based on the another write request relating to the address (583) of the write request in the total address space (581, 583), return an error for the another write request without transmitting the another write request to the storage device (205).

7. The electronic device of any one of claims 1 to 6, wherein the instructions when executed by the processor (120) cause the electronic device (101) to:
identify a change request regarding a memory type of the second logical partition (380), the memory type being related to a cell level of the second memory area (583);
based on the change request, request the storage device (205) to change the memory type of the second logical partition (380);
receive a response indicating a change result of the memory type for the second logical partition (380) from the storage device (205);
based on the change result, update a block module (330) for accessing, through a total address space (581, 583) of the second logical partition (380), the second memory area (1093) of the second logical partition (380) in which the memory type is changed; and
based on the change result, update a block module (320) for accessing the first logical partition (370) based on a change in capacity of the second logical partition.

8. The electronic device of claim 7, wherein the instructions when executed by the processor (120) cause the electronic device (101) to:
in response to a cell level according to the change request being lower than a cell level of the second logical partition (380), based on the second memory capacity of the second logical partition (380) and the available capacity of the first logical partition (370), identify whether the memory type is changeable, and
in response to identifying that the memory type is changeable, request the storage device (205) to change the memory type of the second logical partition (380).

9. The electronic device of any one of claims 1 to 8, wherein the instructions when executed by the processor (120) cause the electronic device (101) to:
in response to identifying that a capacity requested for allocating to second logical partition (380) is greater than total address space (581, 583) of the second logical partition (380), request the storage device (205) to allocate a memory area including a capacity exceeding the total address space (581, 583) from the requested capacity, as a memory area for overprovisioning of the second logical partition (380).

10. The electronic device of any one of claims 1 to 9, wherein the instructions when executed by the processor (120) cause the electronic device (101) to:
identify whether a designated condition for a swap-out for data stored in volatile memory from the memory (130) is satisfied,
based on identifying that the designated condition for the swap- out is satisfied, designate the first logical partition and/or the second logical partition as a swap device in which data from the volatile memory is stored.

11. The electronic device of any one of claims 1 to 10, wherein the instructions when executed by the processor (120) cause the electronic device (101) to:
in response to booting of the electronic device (101), request the storage device (205) to generate the second logical partition (380).

12. The electronic device of any one of claims 1 to 11, wherein the instructions when executed by the processor (120) cause the electronic device (101) to:
allocate at least a part area of an area on which data is not stored from the first memory area (591, 593) to the second memory area (593).

13. The electronic device of any one of claims 1 to 12, wherein the instructions when executed by the processor (120) cause the electronic device (101) to:
receive a response indicating an allocation result for the second memory area (593) from the storage device (205), and
based on the allocation result of the second memory area (593), generate a block module (330) for accessing address space (581) of the second logical partition (380).

14. A storage device comprising:
an interfacing circuit (250) configured to be electrically connected to an electronic device (101), and transmit and receive data with the electronic device (101);
a non-volatile memory (290) comprising a memory unit (390), the memory unit (390) including a first memory area (591) having a first capacity and data is stored in at least part of the first memory area (591, 593), and the first memory area (591, 593) is allocated to a first logical partition (370) of the storage device (205), and
a controller (270), wherein the controller (270) is configured to:
through the interfacing circuit (250), obtain, from the electronic device (101), a request for generating, in the storage device (205), a second logical partition (380) to which a second memory area (593) with a second capacity less than the first capacity is allocated and which has an address space (581) corresponding to the second capacity;
in response to the request, generate the second logical partition (380) including an address space (581) corresponding to second capacity specified in the request; and
through the interfacing circuit (250), transmit a response indicating a result of the request.

15. A method executed by the electronic device (101) including a storage device (205) including memory area (591, 593) able to support a plurality of logical partitions, wherein the memory area (591, 593) includes a first memory area (591) having a first capacity and data is stored in at least part of the first memory area (591, 593), and the first memory area (591, 593) is allocated to a first logical partition (370) of the storage device (205), wherein the method comprises:
identifying whether the electronic device (101) satisfies a designated condition;
based on identifying that the electronic device (101) satisfies the designated condition, delivering, to the storage device (205), a generation request for generating, in the storage device (205), a second logical partition (380) to which a second memory area (593) of the memory (130) with a second capacity less than the first capacity of the first memory area (591, 593) is allocated, and which has an address space (581) corresponding to the second capacity; and
generating by the storage device (205), the second logical partition based on the generation request.
